# EUROPÄISCHE PATENTSCHRIFT

(11) **EP 1 228 251 B1**
(45) Veröffentlichungstag und Bekanntmachung des Hinweises auf die Patenterteilung: **17.11.2004**
(21) Anmeldenummer: 00918570.3
(22) Anmeldetag: 20.04.2000
(51) Int. Cl.: C21C 5/52, F27B 3/18, C21B 13/14, C21B 13/00

(54) **VERFAHREN UND EINRICHTUNG ZUM EINSCHMELZEN VON FEINTEILCHENFÖRMIGEM METALLHÄLTIGEM MATERIAL WIE EISENSCHWAMM**
METHOD AND DEVICE FOR MELTING DOWN FINELY PARTICULATE MATERIAL CONTAINING METAL, SUCH AS SPONGE IRON
PROCEDE ET DISPOSITIF POUR FAIRE FONDRE UN MATERIAU CONTENANT DU METAL SOUS FORME DE FINES PARTICULES, TEL QUE DE L'EPONGE DE FER

(30) Priorität: 22.04.1999 AT 71899
(43) Veröffentlichungstag der Anmeldung: 07.08.2002
(73) Patentinhaber: VOEST-ALPINE INDUSTRIEANLAGENBAU GMBH, 4020 Linz (AT)
(72) Erfinder: BERGER, Harald, A-4020 Linz (AT); MITTAG, Peter, A-4030 Linz (AT); AIGNER, Bernhard, A-4064 Oftering 59 (AT)
(74) Vertreter: Kopecky, Helmut, Dipl.-Ing.
(86) Internationale Anmeldenummer: PCT/AT2000/000101
(87) Internationale Veröffentlichungsnummer: WO 2000/065102

(56) Entgegenhaltungen:
- EP-A- 0 657 549
- EP-A- 0 663 450
- WO-A-93/13228
- DE-A- 2 556 714
- DE-A- 3 326 505
- DE-A- 19 744 151
- FR-A- 670 910
- FR-A- 1 481 142
- GB-A- 2 115 011
- US-A- 2 894 831

## Beschreibung

Die Erfindung betrifft ein Verfahren und eine Einrichtung zum Einschmelzen von Feinteilchen enthaltendem metallhältigem Material, wie Eisenschwamm, in einem metallurgischen Schmelzofen, wobei in einem Innenraum des Schmelzofens eine Metallschmelze und eine auf der Metallschmelze schwimmende Schlackenschicht aufrechterhalten werden, das metallhältige Material mittels einer in die Schlackenschicht eintauchenden Zuführeinrichtung und Energie in Form von elektrischen Lichtbögen zugeführt werden.

Ein großes ungelöstes Problem stellt die Verarbeitung von großen Mengen feinteilchenförmigen metallhältigen Materials, zum Beispiel einer Million Jahrestonnen, dar. Das Einbringen, zumeist Einblasen, von feinteilchenförmigem Material in metallurgische Schmelzöfen, beispielsweise Elektroöfen, beschränkt sich bis heute nur auf die Verarbeitung von relativ kleinen Mengen, wobei das feinteilchenförmige Material als Abrieb oder Abfall anfällt. Feinteilchenförmiges metallhältiges Material wird zur Zeit nur als Zusatz zu anderem metallhältigem Material, das stückig bzw. in Pellet- oder Brikettform in einen Schmelzofen chargiert wird, vorgesehen.

Die anlagenmäßige Zuverlässigkeit der für das Chargieren der Feinteilchen verwendeten Einblasanlagen ist gering, und die Betriebs- und Wartungskosten sind relativ hoch. Es ist nicht möglich, die Feinteilchen etwa über eine einfache Schurre dem Schmelzofen zuzuführen, da die Feinteilchen durch die aufgrund des Unterdrucks im Schmelzofen herrschenden Gasströmungsverhältnisse sofort wieder durch die bei jedem Schmelzofen vorgesehene Absaugung aus dem Ofenraum abgezogen würden. Um dieses Problem zu umgehen, wurden die Feinerze bisher entweder vor der Reduktion in Pelletisieranlagen zu Erzpellets oder das reduzierte feinteilchenförmige Material in Heißbrikettieranlagen zu Briketts verarbeitet und so für die konventionellen Chargiereinrichtungen von Schmelzöfen einsetzbar gemacht. Diese Anlagen bedeuten jedoch einen sehr hohen Investitionsaufwand.

Schmelzofenstäube, wie sie zum Beispiel bei der Stahlerzeugung anfallen, müssen, soferne sie überhaupt recyclierbar sind und nicht deponiert werden müssen, ebenfalls kostenintensiv vor einem Wiedereinsatz in ein Reduktionsaggregat pelletisiert werden. Eine direkte Verwendung der Stäube zur Wiederverwertung bei der Stahlherstellung ist nicht möglich.

Alle Metallschwammprodukte fallen nach ihrer Erzeugung heiß, Eisenschwamm z.B. mit über 600°C, an. Es war schon seit langem Wunsch der Stahlwerker, diese dem Einsatzgut innewohnende Wärme zu nutzen. Dies konnte jedoch aufgrund apparativer Schwierigkeiten (pneumatische Förderung) oder logistischer Probleme (Behälter-Transport) nicht in die Realität umgesetzt werden. Der Energiegewinn durch Einsatz von 100 % ca. 600°C heißem Eisenschwamm würde zum Beispiel mehr als 100 kWh/t Flüssigstahl betragen, was bislang nicht genutzt werden konnte.

Zur Vermeidung von Reoxidation der direktreduzierten Feinteilchen und zum Einblasen der Feinteilchen in den Schmelzofen sind zudem große Mengen an Inertgasen nötig, deren Kosten diese Verfahren verteuern.

Beim Schmelzen von Metall in einem Elektrolichtbogenofen entstehen große Energieverluste durch die beträchtlichen Energiemengen, die durch das heiße Abgas und in weiterer Folge durch die Wand- und Deckelkühlung des Ofengefäßes und die Kühlung der Heißgasleitung abgeführt werden. Bisher war es nicht möglich, diese großen abgeführten Energiemengen auch nur teilweise wieder zu nutzen. Ein Verfahren, das dies ermöglichen würde, könnte weitere bedeutende Vorteile bezüglich der Wirtschaftlichkeit aufweisen.

Bei einem Verfahren gemäß der eingangs beschriebenen Art, bekannt aus der EP 0 134 852 A1, werden Eisenschwammteilchen mit einem großen Anteil an feinteilchenförmigem Material in einen Schmelzofen eingebracht, wobei die Einbringung des Eisenschwamms über ein bis zwei inertisierte Speicherbehälter mittels Förderschnecken gravitierend in die Schmelze erfolgt.

Nachteilig hierbei ist jedoch, daß es aufgrund der zwischen Eisenschwamm und Bestandteilen der Schlacke beim Schmelzen auftretenden Wechselwirkungen zu Kochreaktionen und Gasbildungen kommt, die im Innenraum des Schmelzofens Gasströmungsverhältnisse verursachen, die einer Einbringung der vor allem feinteilchenförmigen Eisenpartikel mittels Schwerkraft stark entgegenwirken und diese mitreißen, so daß die Ausbringung extrem verschlechtert wird. Weiters ist ein Nachteil darin zu sehen, daß es zu einem starken Verschleiß der unmittelbar in den metallurgischen Schmelzofen (in dessen Hochtemperaturbereich) ragenden mechanischen Fördereinrichtung kommt.

Aus der EP 0 462 713 A1 ist es bekannt, eisenhältige Teilchen mit Hilfe einer Aufgabeeinrichtung, die als Förderschnecke oder als pneumatisches Fördersystem ausgebildet ist, zu chargieren. Hierbei ragt ein Förderrohr der Aufgabeeinrichtung durch eine Öffnung in der Seitenwand des Schmelzofens schräg in den Ofen in dessen Hochtemperaturbereich, gegebenenfalls teilweise in die Schlacke.

Neben den hier ebenfalls auftretenden, sich auf die Förderung nachteilig auswirkenden Gasströmungsverhältnissen bedarf es eines erhöhten apparativen und betriebstechnischen Aufwands, um auf die beschriebene Weise eine hohe Einbringungsrate des zu chargierenden Materials zu erzielen, wobei auch hier die Beanspruchung der mechanischen Bestandteile der Aufgabeeinrichtung bei der Einbringung von heißem teilchenförmigem Material ein Problem darstellt.

Gemäß der DE 36 21 323 A1 erfolgt die Zuführung des metallhältigen Materials in den Schmelzofen durch den Kanal einer Hohlelektrode, die gleichzeitig Energie zum Aufschmelzen der Metallteilchen und Schlackenformer und zum Aufrechterhalten eines Metallbades liefert.

Der Hauptnachteil dieses Verfahrens besteht darin, daß der Querschnitt der Elektrode und damit der Durchmesser des Kanals einer Beschränkung unterliegen, die von der für das Schmelzen erforderlichen Stromdichte abhängt. Es ist daher nicht möglich, die Abmessungen der Elektrode beliebig zu vergrößern, um eine höhere Eintragsmenge des metallhältigen Materials zu erzielen. Diese Art der Zuführung des metallhältigen Materials läßt daher die Verwendung des Verfahrens bei der Stahlherstellung in heute üblichem Ausmaß nicht zu, da damit nicht die für eine rationelle Stahlherstellung erforderlichen Mengen an reduziertem Eisen geschmolzen werden können.

Ein Verfahren der eingangs genannten Art ist aus der WO 99/18245 A bekannt. Dabei wird feinkörniges, direkt reduziertes Eisen gegebenenfalls in heißem Zustand mittels einer oder mehrerer Lanzen in die in einem Elektrolichtbogenofen mit vertikalen Elektroden aufrechterhaltene Schaumschlacke eingebracht und geschmolzen. Die Zuführung kann gemäß WO 99/18245 A allein durch Schwerkraft, aber auch durch ein Fördergas erfolgen.

Dieses Verfahren hat jedoch den Nachteil, daß durch die Lanze nur eine geringe Menge an Eisenschwamm (DRI) gefördert werden kann, da der Innendurchmesser von Lanzen im allgemeinen nicht mehr als 100 mm beträgt. Bei Verwendung mehrerer Lanzen zur Erhöhung der Fördermenge ist jedoch deren gleichmäßige Beaufschlagung mit Fördermaterial nur schwer zu bewerkstelligen.

Weiters ist bei diesem Verfahren nachteilig, daß eine Einbringung von Einsatzmaterial ins energetische Zentrum des Ofens nicht möglich ist, wodurch es bei höheren Förderraten zu einer Verstopfung der Lanzen kommt, da das Fördergut nicht schnell genug aufgeschmolzen werden kann. Sind bei einer zentralen Gleichstromelektrode mehrere Lanzen um diese herum angeordnet, kommt es zu einem unterschiedlichen Aufschmelzen des durch die einzelnen Lanzen eingebrachten Materials, da der das energetische Zentrum des Ofens bildende Lichtbogen der Elektrode mit einer Ablenkung gegenüber der Horizontalen von etwa 5° gegen den Ofenboden brennt. Da der Lichtbogen zudem nur eine geringe räumliche Ausdehnung besitzt, kommt es an einer Umfangsstelle der Elektrode zu einem wesentlich größeren Energieeintrag als an anderen Umfangsstellen. Es ist folglich unmöglich, bei der konzentrischen Anordnung der Lanzen gemäß WO 99/18245 das gesamte feinkörnige Eisenmaterial in das Energiezentrum einzubringen.

Gemäß einer weiteren Ausführungsform nach der WO 99/18245 weist der Elektrolichtbogen drei Wechselstromelektroden auf, die in gleichen Abständen voneinander auf einem Kreisumfang im Inneren des Ofens angeordnet sind. Innerhalb des Elektrodenkreises sind drei zur Zuführung des Materials vorgesehene Lanzen konzentrisch angeordnet. Abgesehen von dem praktisch vorhandenen Platzmangel für die Lanzen innerhalb des Elektrodenkreises weist auch diese Lanzenanordnung das Problem eines ungleichmäßigen Aufschrrielzens auf, da die Lichtbögen hier aufgrund des Eigenwiderstands nach außen brennen und damit innerhalb des Elektrodenkreises kein energetisches Zentrum gebildet wird.

Aus der DE-A1 - 197 44 151 ist es bekannt, in einem mit Gleichstrom betriebenen Elektrolichtbogenofen eine zentrisch angeordnete und vertikal in diesen ragenden Elektrode von Einblaslanzen zu umgeben, wobei diese Lanzen bis in die Schlackenschicht ragen. Für Wechselstrom sind drei vertikal in den Elektrolichtbogenofen ragende Elektroden vorgesehen, zwischen denen drei Chargierlanzen angeordnet sind.

Aus der DE 196 08 530 A ist ein Verfahren zur Behandlung von Stahl in einem Wechselstrom-Lichtbogenofen mit drei an einem Kreisumfang angeordneten Elektroden bekannt, bei dem in den Ofen einzubringende Feststoffe mittels CO₂ über eine Lanze unterhalb der Schlackenoberfläche im Bereich der Elektroden eingeblasen werden.

Durch die bei einem Wechselstromofen nach außen gerichteten Lichtbögen kommt es zu keiner Ausbildung eines Energiezentrums. Die Feststoffe werden auch bei diesem Stand der Technik nicht in ein energetisches Zentrum eingebracht, wodurch keine großen Förderraten erzielbar sind. Nachteilig bei diesem Verfahren ist auch der Aufwand für die pneumatische Förderung der Feststoffe durch die Lanzen in den Ofen.

Gemäß US 5,946,339 A werden DRI und Flußmittel mittels eines Zuführrohres in einen Lichtbogenofen mit zwei Elektroden eingebracht, welche in einem Abstand voneinander angeordnet sind, so daß das Einsatzmaterial zwischen ihnen in die im Ofen befindliche Schlacke fällt. Unterhalb der Rohröffnung, die nicht in die Schlacke eintaucht, bildet sich dabei ein Schüttkegel aus.

Aufgrund des zur Einbringung des Einsatzmateriales notwendigen Abstands der Elektroden ist die Energie nicht am Ort der Feststoffeinbringung zentriert, wodurch ein schnelles Aufschmelzen des Föderguts unmöglich ist.

Aus der US 2,894,831 A ist ein elektrischer Schmelzofen bekannt, der zwei schräge Elektroden aufweist, die zum Aufschmelzen von reduziertem Eisenpulver dienen, wobei zentral über dem Schmelzofen ein Schacht vorgesehen ist, in dem eine am Ofenboden fußende Materialsäule gebildet wird, von dem die Elektroden mit aufzuschmelzendem Material zwangsbeliefert werden.

Die durch den Schacht bedingte weite Entfernung der nur sehr gering geneigten Elektroden verhindert jedoch die Bildung eines Energiezentrums im Bereich der Materialeinbringung und verlangsamt so den Schmelzprozeß.

Einen Elektrolichtbogenofen zum Einschmelzen zum Einschmelzen von Eistenrägern, wie Schrott, ist aus der EP-A1 - 0 663 450 bekannt, wobei oberhalb eines Ofeninnenraums ein zentraler Chargierschacht vorgesehen ist. Dieser Chargierschacht endet am Ofendeckel und dient als Vorwärmschacht für Schrott, wobei zum Zweck des Vorwärmens der Einsenträger Abgase des Innenraumes des Ofens über eine gasdurchlässige Absperrvorrichtung am unteren Ende des Chargierschachtes in diesen hineinströmen und den Chargierschacht am oberen Ende verlassen. Feinkörniges Einsatzmaterial wird über Unterbanddüsen, Lanzen oder Hohlelektroden zusätzlich chargiert.

Eine Chargiereinrichtung für einen Elektrolichtbogenofen zum Chargieren von Schrott, insbesondere von Autoschrott, ist aus der WO 93/13228 bekannt. Diese Chargiereinrichtung weist ein Chargierrohr auf, das heb- und senkbar in den Innenraum des Elektrolichtbogenofens ragt. Das Heben und Senken des unteren Endes des Chargierrohres dient dazu, den Durchmesser der von den Schrottpaketen gebildeten Schrottsäule einstellen zu können. Die Einbringen erfolgt dezentral und in größerer Entfernung von den senkrecht in den Innenraum des Elektrolichtbogenofens ragenden Elektroden.

Sollen große Mengen an feinteilchenförmigem metallhältigem Material verarbeitet werden, ist man derzeit daher gezwungen, zwecks Erreichens der für eine rationelle Stahlherstellung erforderlichen Mengen die Feinteilchen in investitionsintensiven Anlagen zum Pelletieren vor dem Reduzieren oder Brikettieren nach dem Reduzieren stückig zu machen, wodurch jedoch der Vorteil des geringen Rohstoffpreises gegenüber Stückerz verlorengeht.

Die vorliegende Erfindung bezweckt die Vermeidung der genannten Nachteile und Schwierigkeiten und stellt sich die Aufgabe, ein Verfahren und eine Einrichtung zu schaffen, die es ermöglichen, metallhältiges Material mit einem Anteil an Feinteilchen bis zu 100% in großer Menge in einem metallurgischen Schmelzofen zu schmelzen, ohne daß ein Austrag der Metallteilchen durch die im Innenraum des Schmelzofens vorliegenden Gasströmungsverhältnisse erfolgt. Weiters soll der apparative und betriebstechnische Aufwand bei der Einbringung des metallhältigen Materials gering gehalten werden; Investitionskosten und Betriebskosten sollen minimiert werden. Es soll eine möglichst einfache und kaum mechanische Bauteile umfassende Art der Chargierung bereitgestellt werden. Insbesondere soll ein Verschleiß der Chargiereinrichtung bei der Einbringung von heißem metallhältigem Material stark vermindert werden, so daß Betriebsunterbrechungen, verursacht durch Wartungsarbeiten, minimiert werden können. Eine wesentliche Aufgabe ist darin zu sehen, trotz eines hohen Anteils an zu schmelzenden Teilchen eine große Schmelzleistung zu erzielen.

Diese Aufgabe wird erfindungsgemäß dadurch gelöst, daß das metallhältige Material auf direktem Weg in den Zentrumsbereich des Schmelzofens mittels mindestens eines ausschließlich der Materialförderung dienenden Chargierrohres über dessen Chargierrohrmündung eingebracht wird, wobei die Position des Chargierrohres (8) und die Eintauchtiefe des unteren Chargierrohrendes in die Schlackenschicht (6) während des Einschmelzens geregelt oder gesteuert wird, daß die Lichtbögen schräg gegen den Zentrumsbereich des Schmelzofens auf die Metallschmelze gerichtet werden und das metallhältige Material in der Schlackenschicht aufgeschmolzen und ein Mischprozeß Schlacke - Metallschmelze im Bereich der Chargierrohrmündung aufrechterhalten wird.

Durch das ständige Eintauchen des Chargierrohres in die Schlackenschicht entsteht ein eigener, von den Verhältnissen des sich oberhalb der Schlackenschicht befindlichen Innenraums des Schmelzofens unabhängiger und unbeeinflußbarer Raum, in dem das metallhältige Material, wie feinteilchenförmiger Eisenschwamm, ungestört in die Schlacke absinken kann und nicht durch die von den aus dem metallurgischen Schmelzofen strömenden heißen Gasen verursachte Kaminwirkung aus dem Schmelzofen ausgetragen wird. Diese heißen Abgase würden auch ein Rohr durchströmen, dessen Innenraum mit dem sich oberhalb der Schlackenschicht befindlichen Innenraum des Schmelzofens in direkter Verbindung steht. Das metallhältige Material, insbesondere Feinteilchen, würde ausgeblasen. Die sich beim erfindungsgemäßen Verfahren bei der Auflösung des feinteilchenförmigen metallhältigen Materials in der Schlacke bildenden und aufsteigenden Reaktionsgase besitzen nicht genug Kraft, die Teilchen des metallhältigen Materials nach oben mitzureißen, sondern führen lediglich zu einer besseren Vermischung von Schlacke und metallhältigem Material, wodurch das Einschmelzen der Teilchen des metallhältigen Materials erleichtert wird.

Infolge der schräg gegen den Zentrumsbereich des Schmelzofens gerichteten Lichtbögen bzw. Elektroden und der gleichzeitigen Chargierung des metallhältigen Materials in eben diesen Bereich wird der Prozeß des Einschmelzens des metallhältigen Metalls beschleunigt, da sich im Bereich der Chargierrohrmündung ein Energiezentrum ausbildet, aus welchem dem metallhältigen Material unmittelbar nach seiner Einbringung Energie im Überschuß zur Verfügung steht. Die Effizienz des Verfahrens wird dadurch wesentlich gesteigert.

Ein zentrisch durch einen Deckel eines Elektrolichtbogenofens ragendes Chargierrohr, zum Chargieren von Formkörpern, wie Granulat, Pellets od. dgl., das gegenüber dem Deckel hebund senkbar ist, ist aus der DE-A1 - 25 56 714 bekannt. Die Heb- und Senkbarkeit dient zum Einstellen der optimalen Höhe oberhalb des Lichtbogens der durch den Deckel des Elektrolichtbogenofens senkrecht in dessen Inneres ragenden Elektroden.

Um ein schnelles Aufschmelzen des Metalls und in kurzer Zeit eine besonders gute Durchmischung des metallhältigen Materials mit der Schlacke an der Mündung des Chargierrohres zu erzielen, ist es vorteilhaft, wenn die dazu benötigte Energie in unmittelbarer Nähe des unteren Chargierrohrendes zugeführt wird.

Zweckmäßig wird metallhältiges Material in stückiger und/oder feinteilchenförmiger Form chargiert. Ein besonderer Vorteil ergibt sich aus dem erfindungsgemäßen Verfahren, wenn ausschließlich feinteilchenförmiges Material eingesetzt wird. Es war bis jetzt nicht möglich, große Mengen von zum Beispiel einer Million Jahrestonnen feinkörnigen Eisenschwamms rentabel zu Stahl zu verarbeiten. Das in einer großen Menge anfallende Feinerz, das am Rohstoffmarkt zu einem äußerst günstigen Preis angeboten wird, mußte deshalb in investitionskosten- und betriebskostenintensiven Pelletieranlagen zu Erzpellets für die Direktreduktion einsetzbar gemacht werden oder der erzeugte feinteilchenförmige Eisenschwamm war nach der Direktreduktion in Heißbrikettieranlagen zu Eisenschwammbriketts zu verarbeiten. Die Erfindung bietet jedoch eine Möglichkeit, die Herstellkosten für das Flüssigmetall erheblich zu senken, und zwar schon allein durch den Einsatz von Feinerz.

Nach einer bevorzugten Ausführungsform des erfindungsgemäßen Verfahrens wird das metallhältige Material im heißen und/oder kalten Zustand durch das Chargierrohr in den Schmelzofen eingebracht, vorzugsweise mit einer Temperatur zwischen 500°C und 1000°C, besonders bevorzugt mit 600°C bis 700°C, was etwa derjenigen Temperatur entspricht, die Eisenschwamm nach seiner Direktreduktion aufweist. Auf diese Weise lassen sich, wenn das Einsatzmaterial vor dem Einschmelzen einem Prozeß unterworfen war, der zu einer Temperaturerhöhung der Teilchen führte, Energiekosten sparen, da die dem eingesetzten Material innewohnende Energie zur Verringerung des notwendigen Schmelzenergiebedarfs ohne besondere anlagentechnische Aufwendungen ausgenutzt werden kann. Ermöglicht wird dies durch das erfindungsgemäß besonders einfache Chargieren, bei dem im Hochtemperaturbereich des Schmelzofens keinerlei mechanische Elemente erforderlich sind.

Eine bevorzugte Anwendung des Verfahrens findet in Verbindung mit einem Direktreduktionsprozeß statt, wobei das erfindungsgemäße Schmelzverfahren im unmittelbaren Anschluß an das Direktreduktionsverfahren angewandt wird.

Zur Erzeugung der Lichtbögen werden schräge Elektroden verwendet, die vorteilhaft unter einem Winkel von 20° bis 70° gegen die Horizontale geneigt, gegen das Zentrum des Schmelzofens (z.B. eines Elektrolichtbogenofens), in dessen Bereich sich das bzw. die Chargierrohr(e) befindet bzw. befinden, auf das Metallbad gerichtet sind und die das bzw. die Chargierrohr(e) in einer eng benachbarten Anordnung umgeben, da hierdurch ein besonders schnelles Aufschmelzen größerer Mengen ermöglicht wird.

Vorteilhaft zielen die Elektroden in ihrer Normalposition, bezogen auf den Badspiegel, auf einen Teilkreis etwa in der Mitte zwischen Außenoberfläche des Chargierrohres und Innenkontur der Herdausmauerung.

Besonders vorteilhaft sind die Elektroden - im Grundriß gesehen - radial auf das Zentrum des Schmelzofens oder tangential auf verschiedene Teilkreise bezüglich des Zentrums ausgerichtet.

In einer bevorzugten Ausführungsform lassen sich die Elektrodenspitzen durch Veränderung des Neigungswinkels der Elektroden und des Elektrodenhubs in ihrem Abstand zum Chargierrohr variabel einstellen.

Vorzugsweise wird auf dem Metallbad im metallurgischen Schmelzofen eine Schaumschlacke gebildet, die beispielsweise durch Einblasen von gasförmigem Sauerstoff unter eventuellem Zusatz von feinkörnigem Kohlenstoff entsteht. Die Schaumschlacke ermöglicht ein rasches Aufschmelzen der metallhältigen Teilchen, da der thermische Wirkungsgrad der in der Schaumschlacke brennenden und von dieser abgeschirmten Lichtbögen besonders hoch ist.

Zur zusätzlichen Bewegung von Metallbad und Schlacke kann der Schmelzofen vorzugsweise mit einem Gas gespült werden, das durch einen im Schmelzofen eingebauten Gasspülstein aufsteigt und das Aufschmelzen des chargierten metallhältigen Materials in der heißen Schlacke fördert.

Eine bevorzugte Ausführungsform der Erfindung besteht darin, daß das Einsatzmaterial ausschließlich mit Hilfe der Schwerkraft durch das Chargierrohr in die Schlacke eingebracht wird. Zweckmäßig ist das Chargierrohr zu diesem Zweck als Fallrohr ausgebildet und vertikal oder in einem geeigneten Winkel zur senkrechten Achse im Schmelzofen positioniert.

Wegen des während des Chargierens ansteigenden Badspiegels ist das Chargierrohr höhenverstellbar bzw. auf- und abbewegbar. Für das Nachsetzen von Chargierrohrteilen oder beim Ofengefäßwechsel kann das Chargierrohr auch in eine Position seitlich des Schmelzofens zur Seite bewegbar sein.

Um ein ständiges Eintauchen der Chargierrohrmündung während des Chargierens bzw. Schmelzens in die Schlackenschicht sicherzustellen, kann die Eintauchtiefe des Rohres, die mindestens 10 mm beträgt, mittels einer Regel- und/oder Steuereinrichtung überwacht werden. Diese Regel- und/oder Steuereinrichtung basiert auf einer Messung der Chargierrate des eingebrachten Materials und auf einer Messung einer Spannung und/oder eines Stroms am/im elektrisch leitenden Chargierrohr. Die Menge der eingebrachten metallhältigen Teilchen bestimmt das Niveau der Schlackenschicht im Schmelzofen und ermöglicht so der Regel- und/oder Steuereinrichtung, mit Hilfe einer Vorrichtung zum Auf- und Abbewegen des Chargierrohres die Eintauchtiefe des Chargierrohres bezüglich des Schlackenniveaus anzugleichen. Weiters wird an das Chargierrohr eine Hilfsspannung angelegt und anhand der Veränderung der gemessenen Spannung und/oder des gemessenen Stroms die Position des unteren Chargierrohrendes über eine Wegmessung festgestellt und dementsprechend darauf reagiert. Die beiden Maßnahmen werden kombiniert angewandt.

Besonders vorteilhaft ist diese Regel- und/oder Steuereinrichtung bei diskontinuierlichem Einschmelzen des metallhältigen Materials, da hierbei Veränderungen des Metall- und Schlackenschichtniveaus auftreten. Ein kontinuierliches Einschmelzen ist ebenso möglich, wobei das Metall- und das Schlackenschichtniveau etwa konstant gehalten werden, so daß eine Höhenverstellung der Chargierrohrmündung - wenn überhaupt - nur selten und im geringen Ausmaß notwendig ist.

Der Innendurchmesser des Chargierrohres beträgt in einer bevorzugten Ausführungsform 200 bis 1500 mm, vorzugsweise 600 bis 800 mm.

Das Chargierrohr ist vorzugsweise aus einem elektrisch leitenden Material, insbesondere aus amorphem Kohlenstoff oder Graphit angefertigt. Zur Erhöhung seiner Lebensdauer kann das Chargierrohr außen mit Al₂O₃ beschichtet sein oder eine Wassersprühkühlung aufweisen. Aber auch Feuerfest-Material oder wasser- oder dampfgekühlte Rohre können als Chargierrohrmaterial verwendet werden.

Vorzugsweise ist das Chargierrohr aus mehreren Schüssen gefertigt, die aneinandergeschraubt und einzeln austauschbar sind und in einem Chargierrohrwartungs- und/oder - wechselstand, zu dem das Chargierrohr schwenkbar ist, rasch ausgetauscht werden können.

Ein besonderer Vorteil ergibt sich, wenn bei einer Kühlung des Schmelzofens und einer Heißgasleitung der Abgaseinrichtung Wasserdampf benutzt wird. Dieser Heißdampf kann vorteilhaft zur Herstellung eines Reduktionsgases in einer Anlage zur Erzeugung von Reduktionsgas, wie einem Reformer, eingesetzt werden.

Vorteilhaft werden das aus dem Chargierrohr und der Chargierschurre austretende staubbeladene Abgas über eine Sekundär-Absaugung und das aus dem metallurgischen Schmelzofen austretende Abgas über eine Heißgasleitung abgesaugt, beide Abgasströme in einem wasser- oder dampfgekühlten Abgasrohr vereint und gemeinsam einer Abgasreinigungseinrichtung zugeführt, von wo der aus dem Abgas abgeschiedene Staub wieder einer Direktreduktionsanlage zugeführt werden kann, so daß er in den Metallverarbeitungsprozeß zurückkehren kann und dadurch die Ausbringung erhöht.

Eine Ausführungsform des erfindungsgemäße Verfahrens zum Einschmelzen von Feinteilchen enthaltendem, metallhältigem Meterial, wie Eisenschwamm, in einem metallurgischen Schmelzofen, wobei in einem Innenraum des Schmelzofens eine Metallschmelze und eine auf der Metallschmelze schwimmende Schlackenschicht aufrechterhalten werden, das metallhältige Material mittels einer in die Schlackenschicht eintauchenden Zuführeinrichtung und Energie in Form von elektrischen Lichtbögen zugeführt werden, ist dadurch gekennzeichnet, daß das metallhältige Material auf direktem Weg ausschließlich mittels Schwerkraft in den Zentrumsbereich des Schmelzofens mittels eines einzigen zentralen, ausschließlich der Materialförderung dienenden Chargierrohres mit einem Innendurchmesser von mindestens 300 mm, vorzugsweise 600 mm, über dessen Chargierrohrmündung eingebracht wird, die Lichtbögen schräg, unter einem Winkel von 20° bis 70°zur Horizontalen geneigt, gegen den Zentrumsbereich des Schmelzofens auf die Metallschmelze gerichtet werden und das metallhältige Material in der Schlackenschicht aufgeschmolzen und ein Mischprozeß Schlacke - Metallschmelze im Bereich der Chargierrohrmündung aufrechterhalten wird.

Eine Ausführungsform der erfindungsgemäßen Einrichtung zum Einschmelzen von Feinteilchen enthaltendem, metallhältigem Material, wie Eisenschwamm, in einem metallurgischen Schmelzofen, wobei der Schmelzofen mit Elektroden zum Zuführen von Energie in ein von einer Schlackenschicht bedecktes Metallbad sowie mit einer in die Schlackenschicht eintauchenden, positionierbaren Zuführeinrichtung zum Beschicken des Schmelzofens mit dem metallhältigen Material ausgestattet ist, dadurch gekennzeichnet, daß die Zuführeinrichtung ein einziges zentral angeordnetes, ausschließlich der Materialförderung dienendes und als Fallrohr ausgebildetes Chargierrohr mit einem Innendurchmesser von mindestens 300 mm, vorzugsweise mindestens 600 mm, aufweist, das in den Zentrumsbereich des Schmelzofen ragt, und daß die Elektroden schräg, unter einem Winkel von 20° bis 70° zur Horizontalen geneigt, gegen den Zentrumsbereich des Schmelzofens gerichtet sind.

Wird das Einschmelzen von metallhältigem feinteilchenförmigem Material mit einer Direktreduktionsanlage gekoppelt, werden die Produktionskapazitäten der kontinuierlich laufenden Reduktionsanlage (ca. ein halbes Jahr ununterbrochener Betrieb) und des metallurgischen Schmelzofens (eine Ofenreise dauert ca. drei Wochen, dazwischen Feuerfest-Reparaturen) vorteilhaft so ausgelegt und korreliert, daß während einer Ofenstillstandszeit, d.h. während des Austauschens des Schmelzofens gegen einen intakten, neu ausgemauerten Schmelzofen, das reduzierte Material gesammelt wird, vorzugsweise in einem Bunkersystem, und das angesammelte reduzierte Material mit einer erhöhten Chargierrate in den neuen Schmelzofen gefördert und dort eingeschmolzen wird, bis es gänzlich aufgearbeitet ist und das frühere Verhältnis der aus der Reduktionsanlage kommenden und in den Schmelzofen chargierten Materialmengen wieder hergestellt ist. Dadurch erübrigt sich eine Zusatzanlage zum Brikettieren des angesammelten reduzierten Materials.

Dies geschieht dadurch, daß
- ein Schnellwechsel des Ofens vorgesehen wird. Dazu ist es notwendig, alle Verbindungen für
   - Kühlwasser/Dampf
   - elektrische Energie
   - Meßleitungen
   für schnell wirkende Absperrung und schnellen An- und Abschluß auszulegen;
- das Hüttenwerk-Layout so entworfen wird, daß ein kompletter Gefäßwechsel in 120 bis 240 Minuten durchgeführt werden kann. Der Gefäßwechsel kann in der vorgegebenen Zeit mit Kran oder mit Flurwagen erfolgen.

Die Erfindung ist nachfolgend anhand mehrerer in der Zeichnung dargestellter Ausführungsbeispiele näher erläutert, wobei die Fig. 1 und 2 eine schematische Darstellung einer erfindungsgemäßen Anlage jeweils teilweise im Schnitt, Fig. 3 eine erfindungsgemäße Anlage in Ansicht von oben und die Fig. 4 und 5 eine schematische Schnittdarstellung des Chargierrohres sowie der an der Chargierrohrmündung herrschenden Verhältnisse veranschaulichen.

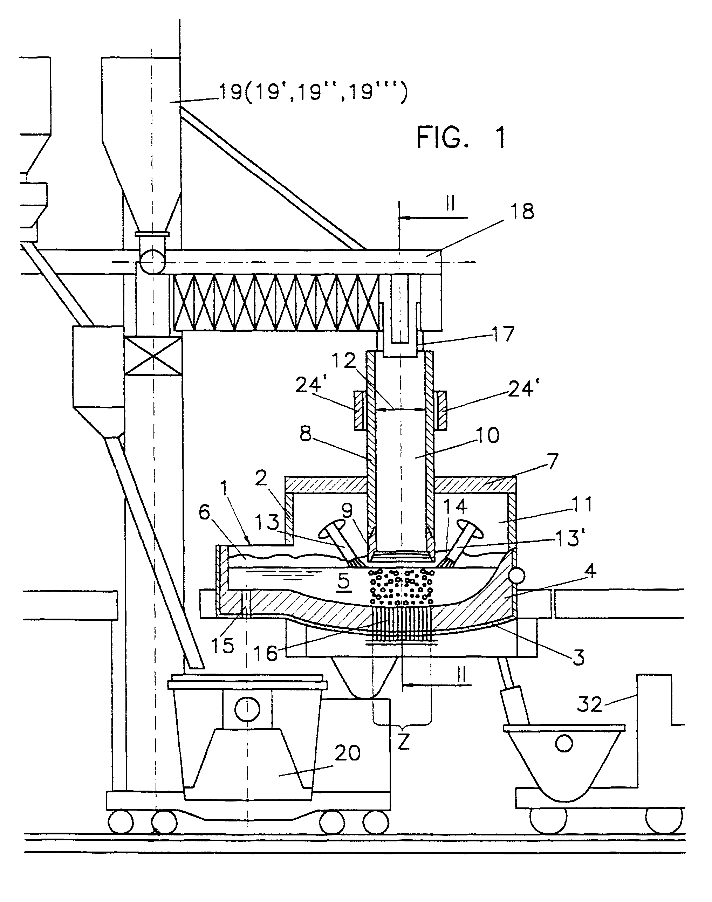

In einem in Fig. 1 als kippbarer Elektrolichtbogenofen ausgebildeten Schmelzofen 1 mit einer Umfangswand 2, einem Boden 3 und einer feuerfesten Auskleidung 4 befindet sich eine den Boden 3 bedeckende Metallschmelze 5 und eine auf der Metallschmelze 5 schwimmende Schlackenschicht 6, die zweckmäßig von Schaumschlacke gebildet ist. Durch den Deckel 7 des Schmelzofens 1 ragt im Zentrumsbereich (Z) des Schmelzofens 1 ein dickwandiges Chargierrohr 8, durch welches das metallhältige Material feinteilchenförmig und/oder in stückiger Form eingebracht wird, in den Schmelzofen 1 und taucht mit seinem unteren Ende 9, das in der Folge als Chargierrohrmündung 9 bezeichnet ist, in die Schlackenschicht 6 ein. Hierdurch ist der Innenraum 10 des Chargierrohres 8 vom über der Schlackenschicht 6 befindlichen Innenraum 11 des Schmelzofens 1 räumlich getrennt.

Das Chargierrohr 8 ist vorteilhaft aus amorphem Kohlenstoff oder Graphit gefertigt. Vorteilhaft weist ein solches außen eine Al₂O₃-Beschichtung auf, wodurch seine Lebensdauer verlängert wird. Die Verwendung von amorphem Kohlenstoff hat den Vorteil, daß große Blöcke zur Verfügung stehen, so daß Rohrabschnitte mit Außendurchmessern von 300 bis 2000 mm (vorzugsweise 1000 bis 1200 mm), Innendurchmessern von 200 bis 1500 mm (vorzugsweise 600 bis 800 mm) und Längen zwischen 500 und 2900 mm daraus gearbeitet werden können. Weiters ist eine elektrische Leitung des Werkstoffs gegeben, die, wie später noch ausgeführt wird, zur Positionssteuerung des Chargierrohres 8 ausgenutzt wird.

Durch die Umfangswand 2 des Schmelzofens 1 ragen mehrere radialsymmetrisch angeordnete Elektroden 13 bis 13''', im dargestellten Ausführungsbeispiel vier, die schräg gegen das Zentrum des Schmelzofens 1, d.h. seine vertikale Mittelachse, gerichtet sind und deren Lichtbögen 14 von der Schlackenschicht 6 eingehüllt sind. Zweckmäßig sind die Elektroden 13 bis 13''' gleichmäßig verteilt rings der Umfangswand 2 angeordnet, die sie durchragen. Im Boden 3 des Schmelzofens 1 befindet sich eine Abstichöffnung 15 für die Metallschmelze 5. Weiters kann im Boden 3 mindestens ein Spülstein 16 vorgesehen sein, durch den Gase zur Verstärkung einer Badbewegung einleitbar sind.

Oberhalb des Chargierrohres 8 sind eine Chargierschurre 17 und ein Förderorgan 18 zum Zuführen des metallhältigen Materials angeordnet, welches einem inertisierten und wärmeisolierten Bunker 19, in dem das metallhältige Material zwischengelagert wird, entnommen wird. Das Fördersystem ist in größerer Höhe oberhalb der Metallschmelze 5 angeordnet und gegen die aus dem Chargierrohr 8 strömenden heißen Gase durch Kühlung oder Feuerfestummantelung geschützt. Das regelbare Förderorgan 18 ist ebenfalls inertisiert und wärmeisoliert. Vorteilhaft ist das Förderorgan 18, um der von unten aus dem Schmelzofen 1 bzw. dem Chargierrohr 8 kommenden Hitzestrahlung besser zu widerstehen, außen feuerfest ausgekleidet, woraus eine höhere Lebensdauer der mechanischen Bauteile resultiert.

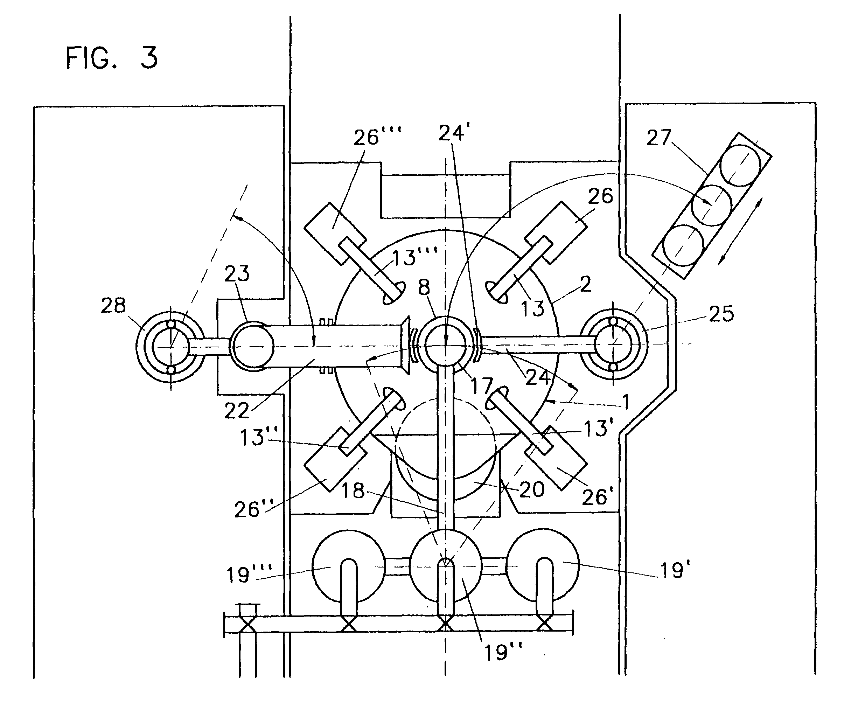

Die Chargierschurre 17 ist vorzugsweise mehrteilig ausgeführt, d.h. von zwei oder mehreren Rohren gebildet, wobei zur jeweiligen Anpassung der Länge an das während des Schmelzvorganges hochsteigende Chargierrohr 8 ein Rohr der Chargierschurre 17 teleskopartig über das andere gleiten kann. Als Werkstoff für die Chargierschurre 17 eignet sich Korund, Graphit, amorpher Kohlenstoff oder eine wassergekühlte Konstruktion. Rohre aus Korund haben den Vorteil einer höheren Lebensdauer aufgrund ihrer thermischen Resistenz. Zum Wechseln der Chargierschurre 17 wird die gesamte Konstruktion des Förderorgans 18 zur Seite geschwenkt. Nach Ende des Chargiervorganges wird das Förderorgan 18 mitsamt der daran befestigten Chargierschurre 17 in Richtung des in Fig. 3 dargestellten Pfeils weggeschwenkt, um sie vor weiterer Hitzebeaufschlagung zu schützen.

Unterhalb des Schmelzofens 1 befindet sich eine als Flurförderzeug 20 ausgebildete Vorrichtung zum Verfahren einer Abstichpfanne, mit deren Hilfe die Metallschmelze 5 zu einem nachfolgenden Verarbeitungsschritt transportierbar ist, sowie ein Flurfahrzeug 32 zum Abtransport der Schlacke.

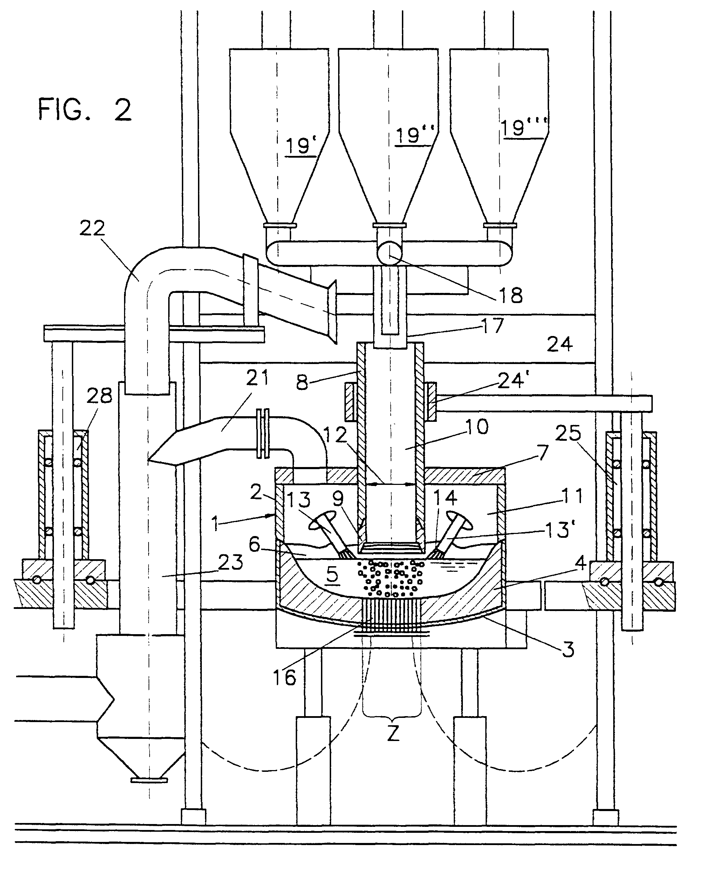

Fig. 2 stellt einen Aufriß der erfindungsgemäßen Einrichtung (Schnitt gemäß der Linie II-II der Fig. 1) dar. Im Deckel 7 des Schmelzofens 1 ist neben dem Chargierrohr 8 eine Heißgasleitung 21 dargestellt, mittels der die Abgase aus dem Innenraum 11 des Schmelzofens 1 entfernt werden. Seitlich oberhalb des Chargierrohres 8 ist weiters ein Sekundär-Absaugrohr 22 angeordnet, das aus dem Chargierrohr 8 und der Chargierschurre 17 strömende Gase ableitet. Beide Abgasströme werden in einem Abgasrohr 23 - das ebenso wie das Sekundär-Absaugrohr 22 bzw. die Heißgasleitung 21 wasser- oder dampfgekühlt ist - vereint und gemeinsam einer Abgasreinigungseinrichtung zugeführt. Das Sekundär-Absaugrohr 22 wird mittels des Hub-/Schwenkwerks 28 auf- und abbewegt, sodaß seine Absaugöffnung immer die an der oberen Chargierrohröffnung anfallenden Gase aus Chargierrohr 8 und Chargierschurre 17 erfassen kann. Zum Ofengefäßwechsel wird das Sekundär-Absaugrohr 22 mittels des Hub-/Schwenkwerks 28 aus dem Abgasrohr 23 gehoben und zur Seite geschwenkt.

Der in allen dampfgekühlten Teilen der erfindungsgemäßen Einrichtung gebildete oder überhitzte Dampf kann vorteilhaft zur Erzeugung von Reduktionsgas, beispielsweise in einem Reformer, unter Ausnutzung der ihm innewohnenden fühlbaren Wärme weiterverwendet werden.

Ein Bunkersystem für zu chargierendes Material ist von drei einzelnen Bunkern 19', 19", 19''' gebildet, von denen zwei als Puffer während einer Stillstandszeit des Schmelzofens 1 oder während eines Schmelzofenwechsels zur Verfügung stehen und einer als Chargierbunker für den Normalbetrieb dient.

Fig. 2 zeigt weiters, daß das Chargierrohr 8 von einem Tragarm 24 gehalten wird, der mit einem in unmittelbarer Nähe des Schmelzofens 1 angeordneten Hub-/Schwenkwerk 25 zum Bewegen des Chargierrohres 8 verbunden ist. Das Chargierrohr 8 ist vorteilhaft durch eine Klemmbacke 24', die nur die Aufgabe des Haltens hat, am Tragarm 24 befestigt. Dieser ist gegenüber einem Tragarm-Hubmast der Hub-/Schwenkvorrichtung 25 sorgfältig isoliert und wird mittels des Tragarm-Hubmastes, der innerhalb der Schwenksäule der Hub-/Schwenkvorrichtung 25 exakt geführt ist, auf- und abbewegt.

Fig. 3 zeigt eine erfindungsgemäße Anlage von oben. In den Schmelzofen 1 ragen bei diesem Ausführungsbeispiel vier gegen das Zentrum des Schmelzofens 1 gerichtete und die Umfangswand 2 des Schmelzofens 1 durchsetzende Elektroden 13, 13', 13", 13"', die jeweils an Elektrodenschlitten 26, 26', 26", 26'" geführt und in regelmäßigen Abständen längs der Umfangswand 2 des Schmelzofens 1 angeordnet sind. Zwischen zwei Elektrodenschlitten 26, 26' ist neben dem Schmelzofen 1 das Hub-/Schwenkwerk 25 angeordnet, das über den Tragarm 24, der das Chargierrohr 8 in Position hält, eine Auf- und Abwärtsbewegung sowie eine Seitwärtsbewegung des Chargierrohres 8 ermöglicht. Im Schwenkbereich des Tragarms 24 ist ein in Pfeilrichtung verfahrbarer Chargierrohrwechselstand 27 angeordnet, der ein rasches Nachsetzen von verbrauchten Teilen des Chargierrohres 8 oder gesamten Chargierrohren 8 gestattet.

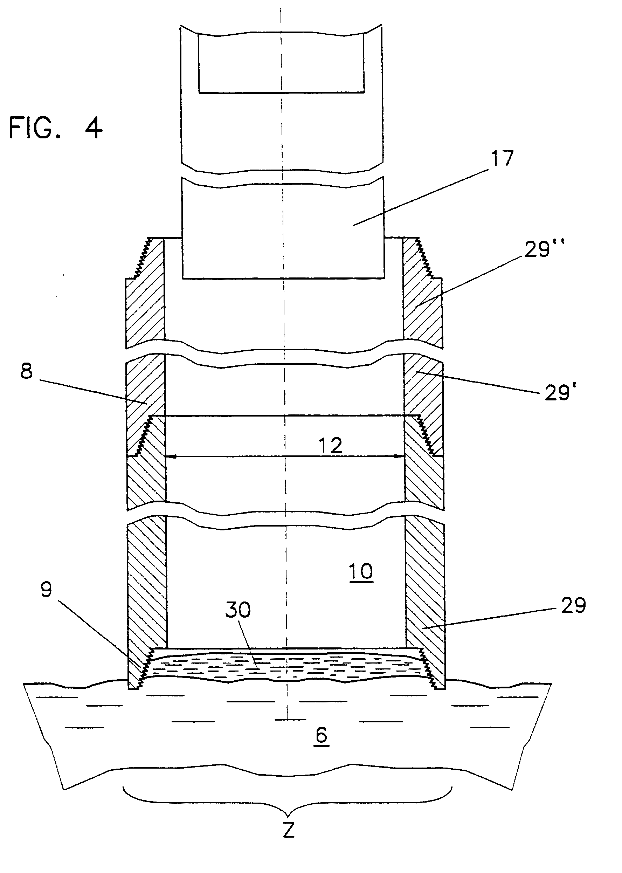

Fig. 4 zeigt einen Schnitt durch ein erfindungsgemäßes Chargierrohr 8, dessen Chargierrohrmündung 9 in die Schlackenschicht 6 eintaucht. Das Chargierrohr 8 ist aus mehreren zusammengeschraubten Schüssen 29, 29', 29" aufgebaut, wodurch ein einfaches und rasches Ergänzen von verbrauchten Teilen ermöglicht wird. Oberhalb der Schlackenschicht 6 ist eine sich im Innenraum 10 des Chargierrohres 8 bildende dünne Schicht 30 von metallhältigem Material dargestellt, das infolge weiterer Chargierung in die heiße Schlackenschicht 6 gedrückt wird und sich dort auflöst. Weiters ist die zur Einbringung des metallhältigen Materials dienende Chargierschurre 17 veranschaulicht, die in das Chargierrohr 8 hineinragt. Das Chargierrohr 8 weist einen Innendurchmesser 12 von 200 bis 1500 mm, vorzugsweise von 600 bis 800 mm auf, wodurch große Chargierraten möglich sind.

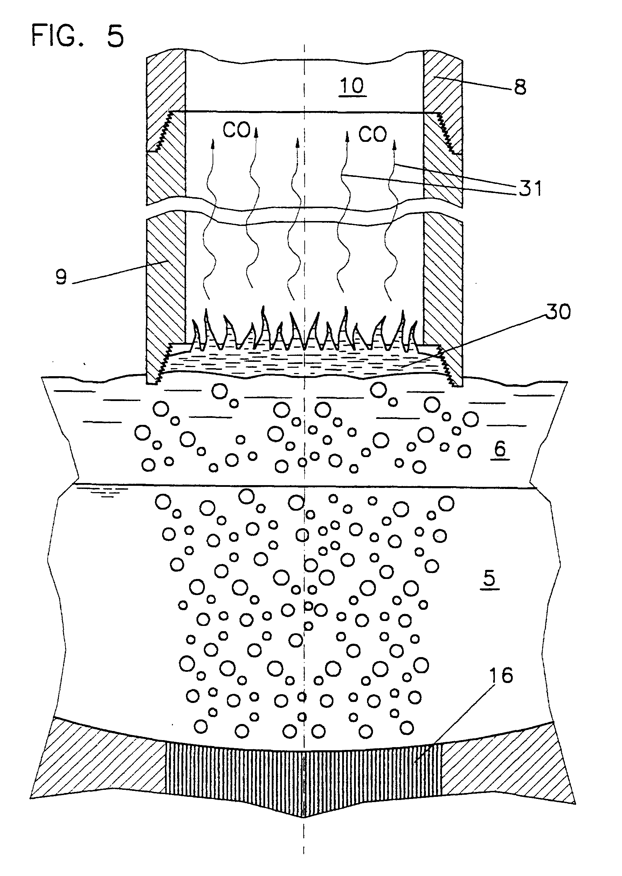

Die schematische Darstellung in Fig. 5 zeigt die an der Chargierrohrmündung 9 herrschenden Verhältnisse der beteiligten Reaktionspartner beim Mischvorgang Schlacke - Metallschmelze bzw. beim Aufschmelzen des metallhältigen Materials. Durch Reaktion von im metallhältigen Material enthaltenen Stoffen und Bestandteilen der Schlacke kommt es beim Auftreffen des metallhältigen Materials auf die Schlackenschicht 6 zu Kochreaktionen, die zu einer verstärkten Badbewegung im Bereich der Chargierrohrmündung 9 führen und damit das Einschmelzen des metallhältigen Materials erleichtern. Im Fall des Chargierens von Eisenschwamm entsteht durch Reaktion der im Eisenschwamm vorhandenen Kohle mit dem FeO der Schlacke Kohlenmonoxid, das im Chargierrohr 8 emporsteigt (durch die Pfeile 31 veranschaulicht) und über das Sekundär-Absaugrohr 22 abgezogen wird. Um das Einschmelzen des metallhältigen Materials weiter zu begünstigen, kann, wie bereits erwähnt, im Boden 3 des Schmelzofens 1 mindestens ein Spülstein 16 vorgesehen sein, durch den ein Gas, beispielsweise Stickstoff, in die Metallschmelze 5 sowie in die Schlackenschicht 6 aufsteigen und die Badbewegung verstärken kann.

Bei einem kippbaren Schmelzofen 1, wie er in Fig. 2 dargestellt ist, steht eine Drehsäule, die das Hub-/Schwenkwerk 25 des Chargierrohres 8 führt, auf einer kippbaren Ofenplattform, wodurch das Chargierrohr 8 beim Abstich mitkippt. Die Chargierschurre 17 wird nach dem Ende des Chargiervorganges, jedoch vor dem Abstich über das Chargierrohr 8 teleskopartig angehoben. Auch die Drehsäule, die das Hub-/Schwenkwerk 28 für das Sekundär-Absaugrohr 22 führt, steht auf der kippbaren Ofenplattform, wodurch das Sekundär-Absaugrohr 22 beim Ofenabstich mitkippt. Dazu ist es vorher mittels des Hub-/Schwenkwerks 28 aus dem Abgasrohr 23 herauszufahren, da letzteres in allen Betriebszuständen stationär und senkrecht bleibt.

Für das Auswechseln des Schmelzofens 1 werden die Elektroden 13 aus dem Schmelzofen 1 ausgefahren und das Chargierrohr 8 über den Ofendeckel 7 angehoben und zum Chargierrohrwartungs- und/oder -wechselstand 27 geschwenkt. Zu diesem Zweck ist die das Hub-/Schwenkwerk 25 führende Drehsäule auf der kippbaren Ofenplattform vorteilhaft auf einem Wälzlager-Drehkranz drehbar gelagert. Zusätzlich wird das Sekundär-Absaugrohr 22 mittels des Hub-/Schwenkwerks 28 aus dem Abgasrohr 23 gehoben und zur Seite geschwenkt. Der Schmelzofen selbst wird mittels eines Kranes zu einer Reparaturstation gebracht und dort neu ausgemauert.

Ein Austauschen des Schmelzofens 1 mittels eines Kranes ist in etwa zwei bis fünf Stunden durchführbar.
Die Funktion der Einrichtung ist wie folgt:

Das metallhältige Material, insbesondere Eisenschwamm, welches sowohl feinteilchenförmig als auch stückig vorliegen kann, wird einem der inertisierten, wärmeisolierten Bunker 19 bis 19", die vorteilhaft unmittelbar an eine Direktreduktionsanlage anschließen und damit die Einschmelzvorrichtung direkt in den Austrag der Direktreduktionsanlage integrieren, entnommen. Wechselweise dient jeweils einer der Bunker 19 bis 19" als Chargierbunker, während die übrigen zwei Bunker als Puffer benutzt werden, um die Zeit zum Austauschen oder Warten des Schmelzofens 1 bzw. zum Entleeren und Anfahren desselben zu überbrücken. Für die normale Produktion ist aber nur der Durchsatz durch einen der Bunker 19 bis 19" vorgesehen. Zweckmäßig stehen auch Bunker für Zuschlagstoffe, wie Feinkalk, Stückkalk, Dolomit, Kohlenstoff usw., zur Verfügung.

Das über das Förderorgan 18 und die Chargierschurre 17 geförderte metallhältige Material gelangt direkt in das Chargierrohr 8, wo es alleine durch die Schwerkraft absinkt.

Die Gesamtlänge des Chargierrohres 8 beträgt bei einem Stahlschmelzofen zum Beispiel für einen Durchsatz von 150 t/h des metallhältigen Materials ca. 7000 mm. Für diese Förderrate wird der Außendurchmesser des Chargierrohres 8 ca. 1200 mm und der Innendurchmesser ca. 800 mm betragen.

Es ist notwendig, daß das Chargierrohr 8 während des Chargiervorganges immer in die Schlackenschicht 6 eintaucht, weil nur dadurch verhindert wird, daß feinteilchenförmiges Material aus dem Chargierrohr 8 durch eine Kaminwirkung ausgeblasen wird. Die Eintauchtiefe der Chargierrohrmündung 9 beträgt mindestens 10 mm. Das Chargierrohr 8 und auch das Sekundär-Absaugrohr 22 müssen im selben Maß nach oben bewegt werden - vorzugsweise synchron -, wie das Metallschmelzen- bzw. Schlackenschichtniveau durch Chargieren und Schmelzen des metallhältigen Materials steigt, wobei auch die Höhe der Schlackenschicht 6 Beachtung finden muß.

Erfüllt wird diese Forderung durch eine Regelung der Höhe der Chargierrohrmündung 9 entsprechend der Chargierrate des metallhältigen Materials. Zusätzlich wird an das Chargierrohr 8 eine Hilfsspannung angelegt und ein Stromfluß zwischen dem Chargierrohr 8 über die leitende flüssige Schlackenschicht 6 zur Bodenanode (Gleichstromofen) oder zur Hilfselektrode bzw. zum Ofengefäß (Drehstromofen) hergestellt. Fährt das Chargierrohr 8 aus der leitenden Schlackenschicht, wird der Stromfluß unterbrochen.

Die Regelung erfolgt derart, daß das Chargierrohr 8 zu Beginn des Einschmelzvorgangs abgesenkt wird, bis die Spannungs- und/oder Strommessung Schlackenkontakt signalisiert. Die im Chargierrohr-Hubmast integrierte Wegmessung steuert ein weiteres Absenken und somit Eintauchen in die Schlackenschicht 6 mindestens 10 mm tief, worauf mit der Chargierung des metallhältigen Materials begonnen wird. Das Chargierrohr 8 wird dann abhängig von der Förderrate des Schmelzgutes dem Anstieg des Niveaus der Schlackenschicht 6 entsprechend langsam nach oben gezogen. Dabei dient die Spannungsund/oder Strommessung zur ständigen Überwachung des Eintauchens der Chargierrohrmündung 9 in die Schlackenschicht 6.

Ein zu tiefes Eintauchen in die Schlackenschicht 6 wird auf dieselbe Art verhindert. Ein zu tief eingetauchtes Chargierrohr 8 könnte das chargierte Material auf der Schlacke "einsperren" und ein Aufschmelzen in der heißen Schlacke behindern bzw. zur "Eisbergbildung" führen. Um unter Ausnutzung der durch die Lichtbögen 14 ausgelösten Schlackenbewegung ein rasches Aufschmelzen des metallhältigen Materials zu ermöglichen, ist darauf zu achten, daß das Schmelzgut immer auf die Oberfläche der dünnflüssigen, durch die Lichtbögen 14 erhitzten Schlackenschicht 6 aufgegeben wird.

Das Aufschmelzen des metallhältigen Materials erfolgt, indem dieses auf die unzähligen Bläschen der Schaumschlacke fällt, die Häutchen dieser Bläschen durchschlägt, tiefer in die Schlackenschicht 6 bzw. in die Metallschmelze 5 absinkt und so schmilzt. Die Bildung einer festen Schicht im Chargierrohr 8 findet daher nicht statt, wenn Chargierrate und elektrischer Leistungseintrag richtig aufeinander abgestimmt sind. Durch eine geeignete Chargierrate wird erreicht, daß das metallhältige Material durch sein Gewicht in die Schlackenschicht 6 gedrückt wird. Bei Eisenschwamm als chargiertes Material kommt es - wie anhand der Fig. 5 erwähnt - durch Reaktion des Kohlenstoffs und der nicht reduzierten Eisenoxide mit dem FeO der heißen Schlacke beim Auftreffen des Eisenschwamms auf die Schlacke im Chargierrohr 8 zu einer Kochreaktion, die das Aufschmelzen der Eisenschwammteilchen erleichtert.

Zum Anfahren des metallurgischen Schmelzofens 1 werden vorteilhaft Metallspäne und nachfolgend eventuell Shredderschrott aus Vorratsbunkern durch das etwas hochgezogene Chargierrohr 8 in den Schmelzofen 1 zu einem Haufen chargiert und mit oder ohne Zuhilfenahme eines Gas-Sauerstoff-Brenners zu einem flüssigen Sumpf aufgeschmolzen. Zweckmäßig wird dieser Start-Schrott bereits an einem Ofengefäß-Wechselstand in den fertig zugestellten, neu einzusetzenden Schmelzofen 1 chargiert und dann der neue Schmelzofen 1 mit Start-Schrott eingesetzt. Schlackenbildner können durch das Chargierrohr 8 oder auch direkt in den Schmelzofen 1 zugegeben werden.

Das Einschmelzen des metallhältigen Materials erfolgt bevorzugt durch mehrere Lichtbögen 14, die von schrägen, seitlich in den Schmelzofen 1 ragenden Graphitelektroden 13 ausgehen. Die Lichtbögen 14 brennen vorteilhaft auf einem Teilkreis etwa in der Mitte zwischen Schmelzenrand und Chargierrohr 8. Die Lichtbögen 14 können radial auf das Zentrum des Schmelzofens 1 oder auch tangential auf einen Teilkreis ausgerichtet sein. Durch Veränderung des Elektrodenhubs und der Neigung der Elektroden können die Lichtbögen in ihrer Entfernung vom Auftreffpunkt des feinteilchenförmigen Chargiergutes auf die Schlackenoberfläche variiert werden. Die Lichtbögen 14 sorgen für eine Bewegung der Schlackenschicht 6 und eine nicht zu tief gehende, weitgehend oberflächliche Bewegung der Metallschmelze 5, die das Aufschmelzen des metallhältigen Materials begünstigt. Die vorteilhaft unter 20 bis 70° zur Horizontalen geneigten Elektroden 13 erzeugen schräge Lichtbögen 14, die wegen ihrer Neigung vollständig oder zumindest weitestgehend von der Schlackenschicht 6 eingehüllt sind, so daß Abstrahlverluste minimiert werden.

Obwohl durch das Chargierrohr 8 kein Schmelzstrom fließt, verschleißt es an seinem unteren Ende 9. Es ist daher ein Ersatz der verschlissenen Schüsse 29 durch neu aufgeschraubte vorgesehen. Dies erfolgt am Chargierrohrwartungs- und/oder -wechselstand 27. Aus dem verfahrbaren Chargierrohrwartungs- und/oder -wechselstand 27 kann dann ein neues Chargierrohr 8 direkt vom Chargierrohr-Tragarm 24 entnommen und wieder in Schmelzposition gebracht werden.

Der beim Einschmelzvorgang entstehende Staub wird aus dem Ofenraum 11 über die Heißgasleitung 21 bzw. aus dem Chargierrohr 8 über das Sekundär-Absaugrohr 22 abgesaugt und kann beispielsweise bei der anschließenden Erzeugung von Eisenschwamm wieder der Direktreduktionsanlage als Einsatzmaterial zugeführt werden.

Die Vorteile des erfindungsgemäßen Verfahrens bzw. der erfindungsgemäßen Einrichtung sind folgende:
* Kontinuierliches direktes Stahlerzeugungsverfahren, bei dem am Beginn Feinerz in die Feinerzdirektreduktionsanlage aufgegeben und am Ende Flüssigstahl aus dem metallurgischen Schmelzofen abgestochen wird.
* Wegfall aller Logistik- und Lagereinrichtungen zwischen einer Direktreduktionsanlage und dem Stahlwerk.
* Deutlich günstigere Investitionskosten und beträchtlich niedrigere Herstellungskosten der Metallschmelze.
* Volle Ausnutzung des günstigen Feinerzpreises ohne Nachteil zusätzlich notwendiger Investitionen.
* Ausnutzung der dem heißen metallhältigen Material, wie Eisenschwamm, innewohnenden Energie zur Verringerung des notwendigen Schmelzenergiebedarfs ohne besondere anlagentechnische Aufwendungen.
* Günstige Umweltrelevanz: Während des Schmelzprozesses von Eisenschwamm abgeschiedener Staub wird gesammelt und kann wieder in eine Direktreduktionsanlage aufgegeben und wiederverwertet werden. Keine Deponie und daher keine zusätzlichen Kosten notwendig. Verbesserung der Ausbringung um ca. 1,5%.
* Niedriger Lärmpegel und niedrige Belastung des elektrischen Netzes durch Mehrelektrodenprinzip des Elektrolichtbogenofens.
* Alle Verfahrensschritte einfach, technisch risikolos, da bereits erprobt oder in anderer Konfiguration großtechnisch angewandt.
* Hohe Verfügbarkeit des Schmelzaggregats durch mehrere schräge Elektroden. Günstige Ersatzteilhaltung durch viele identische Komponenten.
* Hohe Qualität des erzeugten Flüssigmetalls, da nahezu aus 100% jungfräulichem Material.
* Hohe Schmelzleistung des Lichtbogenofens, da das Chargiergut in das Zentrum der Energie eingebracht wird.
* Verwendung des Kühldampfes zur Erzeugung von Reduktionsgas.
* Weiterer Anwendungsbereich des beschriebenen Chargier- und Einschmelzprinzips auch auf Eisenkarbid, stückigen Eisenschwamm und alle Arten von Stäuben sowie auch auf Nichteisenmetalle.

## Patentansprüche

1. Verfahren zum Einschmelzen von Feinteilchen enthaltendem, metallhältigem Material, wie Eisenschwamm, in einem metallurgischen Schmelzofen (1), wobei in einem Innenraum des Schmelzofens (1) eine Metallschmelze (5) und eine auf der Metallschmelze (5) schwimmende Schlackenschicht (6) aufrechterhalten werden, das metallhältige Material mittels einer in die Schlackenschicht (6) eintauchenden Zuführeinrichtung und Energie in Form von elektrischen Lichtbögen (14) zugeführt werden, **dadurch gekennzeichnet, daß** das metallhältige Material auf direktem Weg in den Zentrumsbereich (Z) des Schmelzofens (1) mittels mindestens eines ausschließlich der Materialförderung dienenden Chargierrohres (8) über dessen Chargierrohrmündung (9) eingebracht wird, wobei die Position des Chargierrohres (8) und die Eintauchtiefe des unteren Chargierrohrendes in die Schlackenschicht (6) während des Einschmelzens geregelt oder gesteuert wird, daß die Lichtbögen (14) schräg gegen den Zentrumsbereich (Z) des Schmelzofens (1) auf die Metallschmelze (5) gerichtet werden und das metallhältige Material in der Schlackenschicht (6) aufgeschmolzen und ein Mischprozeß Schlacke - Metallschmelze im Bereich der Chargierrohrmündung (9) aufrechterhalten wird.

2. Verfahren nach Anspruch 1, **dadurch gekennzeichnet, daß** Energie im Nahbereich der Einmündung des Chargierrohres (8) in die Schlacke zugeführt wird.

3. Verfahren nach Anspruch 1 oder 2, **dadurch gekennzeichnet, daß** metallhältiges Material in stückiger und/oder feinteilchenförmiger Form chargiert wird, vorzugsweise ausschließlich in feinteilchenförmiger Form.

4. Verfahren nach einem oder mehreren der Ansprüche 1 bis 3, **dadurch gekennzeichnet, daß** das metallhältige Material im heißen und/oder kalten Zustand durch das Chargierrohr (8) in den Schmelzofen (1) eingebracht wird, vorzugsweise mit der aus einem Reduktionsprozeß stammenden fühlbaren Wärme.

5. Verfahren nach Anspruch 4, **dadurch gekennzeichnet, daß** das metallhältige Material mit einer Temperatur zwischen 500°C und 1000°C, vorzugsweise 600°C und 700°C, durch das Chargierrohr (8) in den Schmelzofen (1) eingebracht wird.

6. Verfahren nach einem oder mehreren der Ansprüche 1 bis 5, **dadurch gekennzeichnet, daß** die Schlackenschicht (6) von Schaumschlacke gebildet wird.

7. Verfahren nach Anspruch 6, **dadurch gekennzeichnet, daß** die Schaumschlacke durch gasförmigen Sauerstoff unter eventuellem Zusatz von feinkörnigem Kohlenstoff gebildet wird.

8. Verfahren nach einem oder mehreren der Ansprüche 1 bis 7, **dadurch gekennzeichnet, daß** das metallhältige Material durch das Chargierrohr (8) ausschließlich mit Hilfe der Schwerkraft in die Schlacke eingebracht wird.

9. Verfahren nach einem oder mehreren der Ansprüche 1 bis 8, **dadurch gekennzeichnet, daß** die Position des Chargierrohres (8) in der Schlackenschicht (6) mit Hilfe der Chargierrate geregelt oder gesteuert wird.

10. Verfahren nach einem oder mehreren der Ansprüche 1 bis 9, **dadurch gekennzeichnet, daß** die Eintauchtiefe des Chargierrohres (8) in die Schlackenschicht (6) mittels einer Spannungs- und/oder Strommessung am/im Chargierrohr (8) in Kombination mit einer Wegmessung geregelt oder gesteuert wird.

11. Verfahren nach einem oder mehreren der Ansprüche 1 bis 10, **dadurch gekennzeichnet, daß** der Schmelzofen (1) vorzugsweise mit einem Gas gespült und hiermit eine Badbewegung initiiert wird und ein Teil des Gases im Chargierrohr (8) aufsteigen gelassen wird.

12. Verfahren nach einem oder mehreren der Ansprüche 1 bis 11, **dadurch gekennzeichnet, daß** das Einschmelzen des metallhältigen Materials unter Aufrechterhaltung ein- und desselben Metall- und gegebenenfalls Schlackenschichtniveaus kontinuierlich durchgeführt wird.

13. Verfahren nach einem oder mehreren der Ansprüche 1 bis 11, **dadurch gekennzeichnet, daß** das Einschmelzen des metallhältigen Materials diskontinuierlich durchgeführt wird, wobei das untere Ende (9) des Chargierrohres (8) in Abhängigkeit des Schlackenschichtniveaus angehoben und abgesenkt wird.

14. Verfahren nach einem oder mehreren der Ansprüche 1 bis 13, **dadurch gekennzeichnet, daß** der bei der Kühlung des Schmelzofens (1) und der Abgaseinrichtungen (21 bis 23) verwendete oder gebildete Dampf zur Erzeugung eines Reduktionsgases in einem Reformer eingesetzt wird.

15. Verfahren nach Anspruch 1, **dadurch gekennzeichnet, daß** das metallhältige Material auf direktem Weg ausschließlich mittels Schwerkraft in den Zentrumsbereich (Z) des Schmelzofens (1) mittels eines einzigen zentralen, ausschließlich der Materialförderung dienenden Chargierrohres (8) mit einem Innendurchmesser von mindestens 300 mm, vorzugsweise 600 mm, über dessen Chargierrohrmündung (9) eingebracht wird, die Lichtbögen (14) schräg, unter einem Winkel von 20° bis 70° zur Horizontalen geneigt, gegen den Zentrumsbereich (Z) des Schmelzofens (1) auf die Metallschmelze (5) gerichtet werden und das metallhältige Material in der Schlackenschicht (6) aufgeschmolzen und ein Mischprozeß Schlacke - Metallschmelze im Bereich der Chargierrohrmündung (9) aufrechterhalten wird.

16. Einrichtung zum Einschmelzen von Feinteilchen enthaltendem, metallhältigem Material, wie Eisenschwamm, in einem metallurgischen Schmelzofen (1), wobei der Schmelzofen (1) mit Elektroden (13) zum Zuführen von Energie in ein von einer Schlackenschicht (6) bedecktes Metallbad sowie mit einer in die Schlackenschicht (6) eintauchenden, positionierbaren Zuführeinrichtung zum Beschicken des Schmelzofens (1) mit dem metallhältigen Material ausgestattet ist, **dadurch gekennzeichnet, daß** die Zuführeinrichtung mindestens ein ausschließlich der Materialförderung dienendes Chargierrohr (8) aufweist, das in den Zentrumsbereich (Z) des Schmelzofen (1) ragt, wobei das Chargierrohr (8) in der Höhenlage verstellbar und die Eintauchtiefe des unteren Chargierrohrendes in die Schlackenschicht (6) regelbar oder steuerbar ist, und daß die Elektroden (13) gegenüber einer Horizontalen schräg gegen den Zentrumsbereich (Z) des Schmelzofens (1) gerichtet sind.

17. Einrichtung nach Anspruch 16, **dadurch gekennzeichnet, daß** das Chargierrohr (8) als Fallrohr ausgebildet ist.

18. Einrichtung nach Anspruch 16 oder 17, **dadurch gekennzeichnet, daß** das untere Ende (9) des Chargierrohres (8) höhenverstellbar ist.

19. Einrichtung nach einem oder mehreren der Ansprüche 16 bis 18, **dadurch gekennzeichnet, daß** das Chargierrohr (8) selbst auf- und abbewegbar ist.

20. Einrichtung nach einem oder mehreren der Ansprüche 16 bis 19, **dadurch gekennzeichnet, daß** das Chargierrohr (8) zur Seite schwenkbar ist.

21. Einrichtung nach einem oder mehreren der Ansprüche 16 bis 20, **dadurch gekennzeichnet, daß** das untere Chargierrohrende (9) mindestens 10 mm unter der Schlackenschichtoberfläche positioniert bzw. in eine solche Position bringbar ist.

22. Einrichtung nach einem oder mehreren der Ansprüche 16 bis 21, **dadurch gekennzeichnet, daß** sie über eine Regel- und/oder Steuereinrichtung zur Höhenpositionierung des Chargierrohres (8) verfügt.

23. Einrichtung nach Anspruch 22, **dadurch gekennzeichnet, daß** die Regel- und/oder Steuereinrichtung über eine Vorrichtung zur Messung der Chargierrate des metallhältigen Materials verfügt, die mit einer Vorrichtung (25) zum Auf- und Abbewegen des Chargierrohres (8) gekoppelt ist.

24. Einrichtung nach Anspruch 23, **dadurch gekennzeichnet, daß** die Regel- und/oder Steuereinrichtung über eine Vorrichtung zur Messung einer Spannung und/oder eines Stroms am/im Chargierrohr (8) verfügt, die mit einer Vorrichtung (25) zum Auf- und Abbewegen des Chargierrohres (8) gekoppelt ist.

25. Einrichtung nach einem oder mehreren der Ansprüche 16 bis 24, **dadurch gekennzeichnet, daß** das Chargierrohr (8) einen Innendurchmesser (12) von 200 - 1500 mm, vorzugsweise von 600 - 800 mm, aufweist.

26. Einrichtung nach einem oder mehreren der Ansprüche 16 bis 25, **dadurch gekennzeichnet, daß** das Chargierrohr (8) aus amorphem Kohlenstoff angefertigt ist.

27. Einrichtung nach einem oder mehreren der Ansprüche 16 bis 25, **dadurch gekennzeichnet, daß** das Chargierrohr (8) aus Graphit angefertigt ist.

28. Einrichtung nach Anspruch 26 und/oder 27, **dadurch gekennzeichnet, daß** das Chargierrohr (8) außen mit Al₂O₃ beschichtet ist.

29. Einrichtung nach Anspruch 26 und/oder 27, **dadurch gekennzeichnet, daß** das Chargierrohr (8) außen mit einer Wassersprühkühlung versehen ist.

30. Einrichtung nach einem oder mehreren der Ansprüche 16 bis 25, **dadurch gekennzeichnet, daß** das Chargierrohr (8) aus Feuerfest-Material gefertigt ist.

31. Einrichtung nach einem oder mehreren der Ansprüche 16 bis 25, **dadurch gekennzeichnet, daß** das Chargierrohr (8) aus wasser- oder dampfgekühlten Rohren gebildet ist.

32. Einrichtung nach einem oder mehreren der Ansprüche 16 bis 30, **dadurch gekennzeichnet, daß** das Chargierrohr (8) aus mehreren Schüssen (29) gefertigt ist, die aneinandergeschraubt und austauschbar sind.

33. Einrichtung nach einem oder mehreren der Ansprüche 16 bis 32, **dadurch gekennzeichnet, daß** im Schmelzofen (1) ein Gasspülstein (16) eingebaut ist, der in das Chargierrohr (8) aufsteigende Gasbläschen bewirkt.

34. Einrichtung nach einem oder mehreren der Ansprüche 16 bis 33, **dadurch gekennzeichnet, daß** die Elektroden (13) zum bzw. zu den Chargierrohr(en) (8) eng benachbart angeordnet sind.

35. Einrichtung nach einem oder mehreren der Ansprüche 16 bis 34, **dadurch gekennzeichnet, daß** die Elektroden (13) in ihrer Normalposition, bezogen auf den Badspiegel, auf einen Teilkreis etwa in der Mitte zwischen der Außenoberfläche des Chargierrohres (8) und der Innenkontur der Herdausmauerung ausgerichtet sind.

36. Einrichtung nach einem oder mehreren der Ansprüche 16 bis 35, **dadurch gekennzeichnet, daß** die Elektroden (13) unter einem Winkel von 20° bis 70° zur Horizontalen geneigt sind.

37. Einrichtung nach einem oder mehreren der Ansprüche 16 bis 36, **dadurch gekennzeichnet, daß** die Elektroden (13) - im Grundriß gesehen - radial auf das Zentrum des Schmelzofens (1) und damit des Chargierrohres (8) gerichtet sind.

38. Einrichtung nach einem oder mehreren der Ansprüche 16 bis 36, **dadurch gekennzeichnet, daß** die Elektroden (13) - im Grundriß gesehen - tangential auf verschiedene Teilkreise ausgerichtet sind.

39. Einrichtung nach einem oder mehreren der Ansprüche 16 bis 38, **dadurch gekennzeichnet, daß** die Elektrodenspitzen durch Veränderung des Neigungswinkels der Elektroden (13) und des Elektrodenhubs in ihrem Abstand zum Chargierrohr (8) variabel einstellbar sind.

40. Einrichtung nach einem oder mehreren der Ansprüche 16 bis 39, **dadurch gekennzeichnet, daß** sie in unmittelbarer Nähe einer Direktreduktionsanlage angeordnet ist.

41. Einrichtung nach einem oder mehreren der Ansprüche 16 bis 40, **dadurch gekennzeichnet, daß** eine Absaugvorrichtung vorgesehen ist und eine Kühleinrichtung für die Absaugeinrichtung (21 bis 23) und für den Schmelzofen (1) gekoppelt ist mit einer Anlage zur Erzeugung eines Reduktionsgases, wie einem Reformer, und vorzugsweise mit einer Reduktionsanlage zur Erzeugung des einzuschmelzenden feinteilchenförmigen Materials.

42. Einrichtung nach einem oder mehreren der Ansprüche 16 bis 41, **dadurch gekennzeichnet, daß** das Chargierrohr (8) zu einem Chargierrohrwartungs- und/oder - wechselstand (27) schwenkbar ist.

43. Einrichtung nach einem oder mehreren der Ansprüche 16 bis 42, **dadurch gekennzeichnet, daß** eine wasser- oder dampfgekühlte Heißgasleitung (21) vorgesehen ist, die in den Innenraum (11) des Schmelzofens (1) mündet und durch die aus dem Innenraum (11) des Schmelzofens (1) staubbeladene Abgase abführbar sind.

44. Einrichtung nach einem oder mehreren der Ansprüche 16 bis 43, **dadurch gekennzeichnet, daß** ein Sekundär-Absaugrohr (22) zum Absaugen von aus dem Chargierrohr (8) sowie der Chargierschurre (17) austretenden Abgasen vorgesehen ist.

45. Einrichtung nach Anspruch 43 und 44, **dadurch gekennzeichnet, daß** ein wasser- oder dampfgekühltes Abgasrohr (23), in das die Heißgasleitung (21) und das Sekundär-Absaugrohr (22) münden, und eine Abgasreinigungsanlage, in der das Abgasrohr (23) mündet, vorgesehen sind.

46. Einrichtung nach Anspruch 45, **dadurch gekennzeichnet, daß** die Abgasreinigungsanlage mit einer Fördereinrichtung versehen ist, mit der in der Abgasreinigungsanlage abgeschiedener Staub einer Direktreduktionsanlage zuführbar ist.

47. Einrichtung nach Anspruch 16, **dadurch gekennzeichnet, daß** die Zuführeinrichtung ein einziges zentral angeordnetes, ausschließlich der Materialförderung dienendes und als Fallrohr ausgebildetes Chargierrohr (8) mit einem Innendurchmesser von mindestens 300 mm, vorzugsweise 600 mm, aufweist, das in den Zentrumsbereich (Z) des Schmelzofens (1) ragt, und daß die Elektroden (13) schräg, unter einem Winkel von 20° bis 70° zur Horizontalen geneigt, gegen den Zentrumsbereich (Z) des Schmelzofens (1) gerichtet sind.

## Claims

1. A method for melting down metal-containing material containing fines, such as sponge iron, in a metallurgical melting furnace (1), wherein, in an interior space of the melting furnace (1), a metal melt (5) and a slag layer (6) floating on top of the metal melt (5) are maintained, the metal-containing material is added by means of a supply means dipping into the slag layer (6) and energy is added in the form of electric arcs (14), **characterized in that** the metal-containing material is directly charged into the zentral region (Z) of the melting furnace (1) by means of at least one charging tube (8) serving exclusively for conveying material via its charging tube opening (9), with the position of the charging tube (8) and the insertion depth of the lower charging tube end into the slag layer (6) being regulated or controlled during melting, that the electric arcs (14) are directed towards the metal melt (5) obliquely against the central region (Z) of the melting furnace (1) and the metal-containing material is melted in the slag layer (6) and a mixed process slag-metal melt is maintained in the region of the charging tube opening (9).

2. A method according to claim 1, **characterized in that**, in the close range of the opening of the charging tube (8), energy is supplied to the slag.

3. A method according to claim 1 or 2, **characterized in that** metal-containing material is charged in lumpy and/or fine-particulate form, preferably exclusively in fine-particulate form.

4. A method according to one or several of claims 1 to 3, **characterized in that** the metal-containing material is fed into the melting furnace (1) via the charging tube (8) in the hot and/or cold state, preferably with the sensible heat originating from a reduction process.

5. A method according to claim 4, **characterized in that** the metal-containing material is charged into the melting furnace (1) through the charging tube (8) at a temperature of between 500°C and 1000°C, preferably of between 600°C and 700°C.

6. A method according to one or several of claims 1 to 5, **characterized in that** the slag layer (6) is formed by foamed slag.

7. A method according to claim 6, **characterized in that** the foamed slag is formed by means of gaseous oxygen, possibly under the supply of fine-grained carbon.

8. A method according to one or several of claims 1 to 7, **characterized in that** the metal-containing material is charged into the slag through the charging tube (8) exclusively by the aid of gravity.

9. A method according to one or several of claims 1 to 8, **characterized in that** the position of the charging tube (8) in the slag layer (6) is regulated or controlled by means of the charging rate.

10. A method according to one or several of claims 1 to 9, **characterized in that** the insertion depth of the charging tube (8) into the slag layer (6) is regulated or controlled by means of a voltage and/or current measuring on/in the charging tube (8) in combination with a distance measuring.

11. A method according to one or several of claims 1 to 10, **characterized in that** the melting furnace (1) is flushed preferably by the aid of a gas, hence initiating a bath turbulence and allowing a portion of the gas to rise in the charging tube (8).

12. A method according to one or several of claims 1 to 11, **characterized in that** the melting down of the metal-containing material is carried out continuously while maintaining one and the same level of the metal and optionally slag layers.

13. A method according to one or several of claims 1 to 11, **characterized in that** the melting down of the metal-containing material is carried out discontinuously, whereby the lower end (9) of the charging tube (8) is raised and lowered depending on the slag layer level.

14. A method according to one or several of claims 1 to 13, **characterized in that** the water vapour used or formed when cooling the melting furnace (1) and the off-gas devices (21 to 23) is used for producing a reducing gas in a reformer.

15. A method according to claim 1, **characterized in that**, exclusively by the aid of gravity, the metal-containing material is directly charged into the central region (Z) of the melting furnace (1) by means of a single central charging tube (8) serving exclusively for conveying material and having an inside diameter of at least 300 mm, preferably 600 mm, via its charging tube outlet (9), the electric arcs (14) are directed obliquely towards the metal melt (5) against the central region (Z) of the melting furnace (1), inclined at an angle of from 20° to 70° to the horizontal line, and the metal-containing material is melted in the slag layer (6) and a mixed process slag-metal melt is maintained in the region of the charging tube outlet (9).

16. A device for melting down metal-containing material containing fines, such as sponge iron, in a metallurgical melting furnace (1), whereby the melting furnace (1) is equipped with electrodes (13) for supplying energy to a metal bath covered by a slag layer (6) as well as with an adjustable supply means dipping into the slag layer (6) for charging the melting furnace (1) with the metal-containing material, **characterized in that** the supply means has at least one charging tube (8) exclusively serving for conveying material, which charging tube expands into the central region (Z) of the melting furnace (1), wherein the charging tube (8) may be adjusted in height and the insertion depth of the lower charging tube end into the slag layer (6) is adjustable or controllable, and that, against a horizontal line, the electrodes (13) are directed obliquely towards the central region (Z) of the melting furnace (1).

17. A device according to claim 16, **characterized in that** the charging tube (8) is configured as a downpipe.

18. A device according to claim 16 or 17, **characterized in that** the lower end (9) of the charging tube (8) may be adjusted in height.

19. A device according to one or several of claims 16 to 18, **characterized in that** the charging tube (8) itself may be raised and lowered.

20. A device according to one or several of claims 16 to 19, **characterized in that** the charging tube (8) may be pivoted sideways.

21. A device according to one or several of claims 16 to 20, **characterized in that** the lower charging tube end (9) is positioned at least 10 mm below the slag layer surface or may be brought into such a position, respectively.

22. A device according to one or several of claims 16 to 21, **characterized in that** it possesses an adjusting and/or controlling means for adjusting the height of the charging tube (8).

23. A device according to claim 22, **characterized in that** the adjusting and/or controlling means has a device for measuring the charging rate of the metal-containing material, which device is coupled to a means (25) for raising and lowering the charging tube (8).

24. A device according to claim 23, **characterized in that** the adjusting and/or controlling means has a device for measuring a voltage and/or a current at/in the charging tube (8), which device is coupled to a means (25) for raising and lowering the charging tube (8).

25. A device according to one or several of claims 16 to 24, **characterized in that** the charging tube (8) has an inside diameter (12) of 200-1500 mm, preferably of 600-800 mm.

26. A device according to one or several of claims 16 to 25, **characterized in that** the charging tube (8) is manufactured from amorphous carbon.

27. A device according to one or several of claims 16 to 25, **characterized in that** the charging tube (8) is manufactured from graphite.

28. A device according to claim 26 and/or 27, **characterized in that**, on the outside, the charging tube (8) is coated with Al₂O₃.

29. A device according to claim 26 and/or 27, **characterized in that**, on the outside, the charging tube (8) is furnished with a water spray cooling system.

30. A device according to one or several of claims 16 to 25, **characterized in that** the charging tube (8) is manufactured from a fireproof material.

31. A device according to one or several of claims 16 to 25, **characterized in that** the charging tube (8) is manufactured from tubes cooled by means of water or water vapour.

32. A device according to one or several of claims 16 to 30, **characterized in that** the charging tube (8) is manufactured from several shots (29), which are screwed together and exchangeable.

33. A device according to one or several of claims 16 to 32, **characterized in that** a gas flushing stone (16) is integrated into the melting furnace (1), which gas flushing stone causes gas bubbles to rise into the charging tube (8).

34. A device according to one or several of claims 16 to 33, **characterized in that** the electrodes (13) are arranged in close vicinity to the charging tube (8) or to the charging tubes (8), respectively.

35. A device according to one or several of claims 16 to 34, **characterized in that**, in their normal position with reference to the bath level, the electrodes (13) are directed towards a partial circle located approximately in the centre between the outer surface of the charging tube (8) and the inner outline of the hearth brick lining.

36. A device according to one or several of claims 16 to 35, **characterized in that** the electrodes (13) are inclined at an angle of from 20° to 70° to the horizontal line.

37. A device according to one or several of claims 16 to 36, **characterized in that**, seen in the ground plan, the electrodes (13) are radially directed towards the centre of the melting furnace (1) and hence the charging tube (8).

38. A device according to one or several of claims 16 to 36, **characterized in that**, seen in the ground plan, the electrodes (13) are tangentially directed towards various partial circles.

39. A device according to one or several of claims 16 to 38, **characterized in that**, by changing the angle of inclination of the electrodes (13) and the electrode stroke with regard to their distance from the charging tube (8), the tips of the electrodes are variably adjustable.

40. A device according to one or several of claims 16 to 39, **characterized in that** it is arranged in the immediate vicinity of a direct reduction plant.

41. A device according to one or several of claims 16 to 40, **characterized in that** a suction means is provided and a cooling system for the suction device (21 to 23) and for the melting furnace (1) is coupled to a plant for the production of a reducing gas, such as a reformer, and preferably to a reduction plant for the production of the fine-particulate material to be melted down.

42. A device according to one or several of claims 16 to 41, **characterized in that** the charging tube (8) is pivotable towards a charging tube maintenance and/or changing station (27).

43. A device according to one or several of claims 16 to 42, **characterized in that** a hot gas duct (21) cooled by means of water or water vapour is foreseen, which hot gas duct runs into the interior space (11) of the melting furnace (1) and via which dust-loaded off-gases are dischargable from the interior space (11) of the melting furnace (1).

44. A device according to one or several of claims 16 to 43, **characterized in that** a secondary suction tube (22) for sucking off off-gases emerging from the charging tube (8) as well as from the charging chute (17) is provided.

45. A device according to claim 43 and 44, **characterized in that** a discharge tube (23) cooled by means of water or water vapour, into which the hot gas duct (21) and the secondary suction tube (22) run, and an off-gas purification plant, into which the discharge tube (23) runs, are provided.

46. A device according to claim 45, **characterized in that** the off-gas purification means is provided with a conveying device by the aid of which dust separated in the off-gas purification means may be taken to a direct reduction plant.

47. A device according to claim 16, **characterized in that** the supply means has a single centrally-arranged charging tube (8) serving exclusively for conveying material and being configured as a downpipe, which charging tube has an inside diameter of at least 300 mm, preferably 600 mm, and expands into the central region (Z) of the melting furnace (1) and that the electrodes (13) are directed obliquely towards the central region (Z) of the melting furnace (1), inclined at an angle of from 20° to 70° to the horizontal line.

## Revendications

1. Procédé pour la mise en fusion, dans un four de fusion (1) métallurgique, d'un matériau contenant du métal sous forme des fines particules, tel que de l'éponge de fer, dans lequel un bain de métal en fusion (5) et une couche de laitier (6) flottant sur le bain de métal (5) sont entretenus dans un espace intérieur du four de fusion (1), le matériau contenant du métal étant amené au moyen d'un dispositif d'amenée plongeant dans la couche de laitier (6) et de l'énergie est amenée sous forme d'arcs électriques (14), **caractérisé en ce que** le matériau contenant du métal est chargé par la voie directe dans la région centrale (Z) du four de fusion (1) au moyen d'au moins un tube de chargement (8) servant exclusivement au transport de matériau, via l'embouchure (9) du tube de chargement, la position du tube de chargement (8) et la profondeur de plongée de l'extrémité inférieure du tube de chargement dans la couche de laitier (6) est régulée ou commandée pendant la fusion, **en ce que** les arcs électriques (14) sont dirigés en oblique contre la région centrale (Z) du four de fusion (1) et sur le bain de métal (5), et le matériau contenant du métal dans la couche de laitier (6) est mis en fusion, et **en ce qu'**un processus de mélange laitier/bain de métal est entretenu dans la région de l'embouchure (9) du tube de chargement.

2. Procédé selon la revendication 1, **caractérisé en ce que** de l'énergie est amenée dans le laitier dans la région située à proximité de l'embouchure du tube de chargement (8),

3. Procédé selon l'une ou l'autre des revendications 1 et 2, **caractérisé en ce que** le matériau contenant du métal est chargé sous forme de morceaux et/ou de particules fines, de préférence exclusivement sous forme de particules fines.

4. Procédé selon l'une ou plusieurs des revendications 1 à 3, **caractérisé en ce que** le matériau contenant du métal est chargé dans le four de fusion (1) à l'état chaud et/ou froid à travers le tube de chargement (8), de préférence avec la chaleur sensible provenant d'un processus de réduction.

5. Procédé selon la revendication 4, **caractérisé en ce que** le matériau contenant du métal est chargé dans le four de fusion (1) à travers le tube de chargement (8) à une température entre 500°C et 1000°C, de préférence 600°C et 700°C.

6. Procédé selon l'une ou plusieurs des revendications 1 à 5, **caractérisé en ce que** la couche de laitier (6) est formée par du laitier mousseux.

7. Procédé selon la revendication 6, **caractérisé en ce que** le laitier mousseux est formé par de l'oxygène gazeux avec addition éventuelle de carbone à grains fins.

8. Procédé selon l'une ou plusieurs des revendications 1 à 7, **caractérisé en ce que** le matériau contenant du métal est chargé dans le laitier à travers le tube de chargement (8) exclusivement par gravité.

9. Procédé selon l'une ou plusieurs des revendications 1 à 8, **caractérisé en ce que** la position du tube de chargement (8) dans la couche de laitier (6) est régulée ou commandée à l'aide du taux de chargement.

10. Procédé selon l'une ou plusieurs des revendications 1 à 9, **caractérisé en ce que** la profondeur de plongée du tube de chargement (8) dans la couche de laitier (6) est régulée ou commandée au moyen d'une mesure de tension et/ou de courant sur/dans le tube de chargement (8) en combinaison avec une mesure de trajet.

11. Procédé selon l'une ou plusieurs des revendications 1 à 10, **caractérisé en ce que** le four de fusion (1) est rincé de préférence avec un gaz, ce qui initie un mouvement du bain et fait monter une partie du gaz dans le tube de chargement (8).

12. Procédé selon l'une ou plusieurs des revendications 1 à 11, **caractérisé en ce que** la fusion du matériau contenant du métal est effectuée en maintenant de manière continue le même niveau de métal et, le cas échéant, de couche de laitier.

13. Procédé selon l'une ou plusieurs des revendications 1 à 11, **caractérisé en ce que** la fusion du matériau contenant du métal est effectuée en discontinu, l'extrémité inférieure (9) du tube de chargement (8) étant relevée et abaissée en fonction du niveau de couche de laitier.

14. Procédé selon l'une ou plusieurs des revendications 1 à 13, **caractérisé en ce que** la vapeur utilisée ou formée lors du refroidissement du four de fusion (1) et des dispositifs de fumées (21 à 23) est utilisé pour produire un gaz de réduction dans un reformeur.

15. Procédé selon la revendication 1, **caractérisé en ce que** le matériau contenant du métal est chargé par la voie directe exclusivement par gravité jusque dans la région centrale (Z) du four de fusion (1) au moyen d'un unique tube de chargement central (8) servant exclusivement au transport de matériau, avec un diamètre intérieur d'au moins 300 mm, de préférence de 600 mm, via son embouchure (9) de tube de chargement, **en ce que** les arcs électriques (14) sont dirigés en oblique, sous un angle de 20° à 70° par rapport à l'horizontale, contre la région centrale (Z) du four de fusion (1) et sur le bain de métal (5) et le matériau contenant du métal dans la couche de laitier (6) est mis en fusion, et **en ce qu'**un processus de mélange laitier/bain de métal est entretenu dans la région de l'embouchure (9) du tube de chargement.

16. Dispositif de mise en fusion d'un matériau contenant du métal sous forme de particules fines, tel que de l'éponge de fer, dans un four de fusion (1) métallurgique, dans lequel le four de fusion (1) est équipé d'électrodes (13) pour amener de l'énergie dans un bain métallique recouvert d'une couche de laitier (6) ainsi que d'un dispositif d'amenée susceptible d'être mis en position et plongeant dans la couche de laitier (6), pour charger le four de fusion (1) avec le matériau contenant du métal, **caractérisé en ce que** le dispositif d'amenée présente au moins un tube de chargement (8) servant exclusivement au transport de matériau, lequel fait saillie dans la région centrale (Z) du four de fusion (1), le tube de chargement (8) étant réglable en position en hauteur, et la profondeur de plongée de l'extrémité inférieure du tube de chargement dans la couche de laitier (6) étant régulable ou commandable, et ce que les électrodes (13) sont orientées, par rapport à une horizontale, en oblique contre la région centrale (Z) du four de fusion (1).

17. Dispositif selon la revendication 16, **caractérisé en ce que** le tube de chargement (8) est réalisé sous forme de tube vertical.

18. Dispositif selon l'une ou l'autre des revendications 16 et 17, **caractérisé en ce que** l'extrémité inférieure (9) du tube de chargement (8) est réglable en hauteur.

19. Dispositif selon l'une ou plusieurs des revendications 16 à 18, **caractérisé en ce que** le tube de chargement (8) est lui-même mobile en montée et en descente.

20. Dispositif selon l'une ou plusieurs des revendications 16 à 19, **caractérisé en ce que** le tube de chargement (8) peut être pivoté latéralement.

21. Dispositif selon l'une ou plusieurs des revendications 16 à 20, **caractérisé en ce que** l'extrémité inférieure (9) du tube de chargement peut être positionnée au moins 10 mm au-dessous de la surface de la couche de laitier ou peut être amenée dans une telle position.

22. Dispositif selon l'une ou plusieurs des revendications 16 à 21, **caractérisé en ce qu'**il dispose d'un dispositif de régulation et/ou de commande pour le positionnement en hauteur du tube de chargement (8).

23. Dispositif selon la revendication 22, **caractérisé en ce que** le dispositif de régulation et/ou de commande dispose d'un dispositif de mesure du taux de chargement du matériau contenant du métal, qui est accouplé à un dispositif (25) de montée et de descente du tube de chargement (8).

24. Dispositif selon la revendication 23, **caractérisé en ce que** le dispositif de régulation et/ou de commande dispose d'un dispositif de mesure d'une tension et/ou d'un courant sur/dans le tube de chargement (8), qui est accouplé à un dispositif (25) de montée et de descente du tube de chargement (8).

25. Dispositif selon l'une ou plusieurs des revendications 16 à 24, **caractérisé en ce que** le tube de chargement (8) présente un diamètre intérieur (12) de 200 à 1500 mm, de préférence de 600 à 800 mm.

26. Dispositif selon l'une ou plusieurs des revendications 16 à 25, **caractérisé en ce que** le tube de chargement (8) est réalisé en carbone amorphe.

27. Dispositif selon l'une ou plusieurs des revendications 16 à 25, **caractérisé en ce que** le tube de chargement (8) est réalisé en graphite.

28. Dispositif selon la revendication 26 et/ou 27, **caractérisé en ce que** le tube de chargement (8) est recouvert extérieurement de Al₂O₃.

29. Dispositif selon la revendication 26 et/ou 27, **caractérisé en ce que** le tube de chargement (8) est pourvu à l'extérieur d'un refroidissement par arrosage d'eau.

30. Dispositif selon l'une ou plusieurs des revendications 16 à 25, **caractérisé en ce que** le tube de chargement (8) est réalisé en matériau réfractaire.

31. Dispositif selon l'une ou plusieurs des revendications 16 à 25, **caractérisé en ce que** le tube de chargement (8) est formé par des tubes refroidis à l'eau ou à la vapeur.

32. Dispositif selon l'une ou plusieurs des revendications 16 à 30, **caractérisé en ce que** le tube de chargement (8) est constitué par plusieurs tronçons (29) qui sont vissés les uns aux autres et interchangeables.

33. Dispositif selon l'une ou plusieurs des revendications 16 à 32, **caractérisé en ce que** dans le four de fusion (1) est monté un bloc de rinçage au gaz (16) qui provoque des bulles de gaz montant dans le tube de chargement (8).

34. Dispositif selon l'une ou plusieurs des revendications 16 à 33, **caractérisé en ce que** les électrodes (13) sont agencées au voisinage très proche du/des tube(s) de chargement (8).

35. Dispositif selon l'une ou plusieurs des revendications 16 à 34, **caractérisé en ce que** dans leur position normale, les électrodes (13) sont orientées, par rapport au niveau du bain, sur un cercle partiel, approximativement au milieu entre la surface extérieure du tube de chargement (8) et le contour intérieur de la chemise du four.

36. Dispositif selon l'une ou plusieurs des revendications 16 à 35, **caractérisé en ce que** les électrodes (13) sont inclinées sous un angle de 20° à 70° par rapport à l'horizontale.

37. Dispositif selon l'une ou plusieurs des revendications 16 à 36, **caractérisé en ce que** vues en plan, les électrodes (13) sont orientées radialement vers le centre du four de fusion (1) et par conséquent du tube de chargement (8).

38. Dispositif selon l'une ou plusieurs des revendications 16 à 36, **caractérisé en ce que** vues en plan, les électrodes (13) sont orientées tangentiellement vers différents cercles partiels.

39. Dispositif selon l'une ou plusieurs des revendications 16 à 38, **caractérisé en ce que** les pointes d'électrodes peuvent être réglées de manière variable, dans leur distance par rapport au tube de chargement (8), par modification de l'angle d'inclinaison des électrodes (13) et de la course des électrodes.

40. Dispositif selon l'une ou plusieurs des revendications 16 à 39, **caractérisé en ce qu'**il est agencé à proximité immédiate d'une installation de réduction directe.

41. Dispositif selon l'une ou plusieurs des revendications 16 à 40, **caractérisé en ce qu'**il est prévu un dispositif d'aspiration, et pour le dispositif d'aspiration (21 à 23) et pour le four de fusion, un système de refroidissement est accouplé avec une installation de production d'un gaz de réduction, telle qu'un reformeur, et de préférence avec une installation de réduction pour produire le matériau sous forme de petites particules à mettre en fusion.

42. Dispositif selon l'une ou plusieurs des revendications 16 à 41, **caractérisé en ce que** le tube de chargement (8) peut pivoter vers un poste d'entretien et/ou de remplacement du tube de chargement.

43. Dispositif selon l'une ou plusieurs des revendications 16 à 42, **caractérisé en ce qu'**il est prévu une conduite de gaz chaud (21) refroidie à l'eau ou à la vapeur, qui débouche dans l'espace intérieur (11) du four de fusion (1) et à travers laquelle les fumées chargées de poussière peuvent être évacuées hors de l'espace intérieur (11) du four de fusion (1)

44. Dispositif selon l'une ou plusieurs des revendications 16 à 43, **caractérisé en ce qu'**un tube d'aspiration secondaire (22) est prévu pour aspirer les fumées sortant hors du tube de chargement (8) ainsi que hors de la goulotte de chargement (17).

45. Dispositif selon les revendications 43 et 44, **caractérisé en ce qu'**il est prévu un tuyau d'échappement des fumées (23) refroidi à l'eau ou à la vapeur dans lequel débouchent la conduite de gaz chaud (21) et le tube d'aspiration secondaire (22), et une installation d'épuration des fumées dans laquelle débouche le tuyau d'échappement des fumées (23).

46. Dispositif selon la revendication 45, **caractérisé en ce que** l'installation d'épuration des fumées est pourvue d'un dispositif de convoyage par lequel de la poussière déposée dans l'installation d'épuration des fumées peut être amenée à une installation de réduction directe.

47. Dispositif selon la revendication 16, **caractérisé en ce que** le dispositif d'amenée présente un tube de chargement (8) unique avec un diamètre intérieur d'au moins 300 mm, de préférence de 600 mm, agencé de manière centrale, servant exclusivement au transport de matériau et réalisé sous forme de tube vertical, lequel fait saillie jusque dans la région centrale (Z) du four de fusion (1), et **en ce que** les électrodes (13), inclinées en oblique sous un angle de 20° à 70° par rapport à l'horizontale, sont orientées contre la région centrale (Z) du four de fusion (1).
